# EUROPEAN PATENT SPECIFICATION

(11) **EP 4 619 463 B1**
(45) Date of publication and mention of the grant of the patent: **09.09.2026**
(21) Application number: 23805043.9
(22) Date of filing: 13.11.2023
(51) Int. Cl.: C08J 11/14, C08J 11/28, C08G 18/09, C08G 18/16, C08G 18/18, C08G 18/22, C08G 18/42, C08G 18/76, C08J 9/14

(54) **DEPOLYMERIZATION OF POLYISOCYANURATES WITH ORGANIC AMINE BASES**
DEPOLYMERISATION VON POLYISOCYANURATEN MIT ORGANISCHEN AMINBASEN
DÉPOLYMÉRISATION DE POLYISOCYANURATE AVEC DES BASES AMINE ORGANIQUES

(30) Priority: 15.11.2022 EP 22207414
(43) Date of publication of application: 24.09.2025
(73) Proprietor: Evonik Operations GmbH, 45128 Essen (DE)
(72) Inventor: OTTO, Sarah, 45128 Essen (DE); SUCHAN, Michael, 45894 Gelsenkirchen (DE); FERENZ, Michael, 45147 Essen (DE); WEIß, Christine, 46282 Dorsten (DE)
(74) Representative: Evonik Patent Association
(86) International application number: PCT/EP2023/081612
(87) International publication number: WO 2024/104963

(56) References cited:
- DE-A1- 102012 112 254

## Description

The present invention relates to a process for depolymerization of polyisocyanurates, especially rigid polyisocyanurate foams, under mild conditions and low salt concentration in the reaction mixture, wherein valuable raw materials of the polyisocyanurate can be recovered in high yields and good quality, i.e. a quality allowing usage of the recycled raw materials for production of new chemicals, in particular new polyurethanes, preferably polyurethane foams, or polyisocyanurates, preferably polyisocyanurate foams.

Polyurethanes are materials of considerable utility in the production of rigid and flexible foams, solid and microcellular elastomers, sealants, coatings, and adhesives. The versatility, relatively low cost, and superior properties of polyurethanes have resulted in the rapid growth of the polyurethane industry over the past 50 years. Currently, many thousand tons of polyurethanes are produced each year throughout the world and different methods have been developed for chemical recycling of polyurethanes, e.g. glycolysis, ammonolysis, aminolysis, acidolysis and hydrolysis. These methods have in common that mainly urethane and urea groups but also adjacent uretdione, carbodiimide, allophanate, biuret groups are cleaved.

Polyisocyanurate polymers differ from polyurethanes in that they comprise isocyanurate groups which are more stable and less reactive than the functional groups cleaved during chemolysis of polyurethanes due to the ring structure of the isocyanurate groups. Another difference between polyurethanes and polyisocyanurates is that polyurethanes are usually formed by reaction of a polyisocyanate and a polyetherpolyol while polyisocyanurates are obtained from a reaction of a polyisocyanate and a polyesterpolyol. In contrast to polyether groups, polyester groups are cleaved during chemolysis, too. Thus, the chemical methods developed and used for polyurethane recycling cannot be applied to polyisocyanurates.

Because of the higher chemical stability, polyisocyanurate foams are used as insulation plates in applications with particularly high requirements on strength and flame retardancy. It has long been known to those skilled in the art that high chemical stability of polyisocyanurates can be achieved by a high number of isocyanurate groups. The prevailing opinion in the art was that polyisocyanurate foams cannot be cleaved in recycling processes based on chemical recycling, especially hydrolysis, to recover the raw materials of the polyisocyanurate foams, and that the isocyanurate structure is largely preserved.

P.N. Gribkova et al, "Degradation of a polyisocyanurate obtained by polycyclotrimerization of 4,4'-di-isocyanatodiphenylmethan", Polymer Science U.S.S.R., Vol. 22, pp. 299 - 304, compares thermal, thermal-hydrolytic and thermal-oxidative degradation of isocyanurates. It was found that under all conditions homolytic decomposition and formation of CO and H₂ was observed, and no high yield of raw materials was obtained. This confirms the prevailing opinion in the art that polyisocyanurates cannot be recycled to monomers that can be re-used to produce new polyisocyanurates or polyurethanes. DE102012112254A1 discloses the aminolysis of a polyisocyanurate with 2-aminoethanol. The produced recyclate is used to prepare another polymer by reaction with HMDI.

As consequence of the high chemical stability of polyisocyanurates, the development of chemical recycling methods so far focused on polyurethane foams comprising polyether polyols and having an isocyanate index of lower than 150.

Resource scarcity, climate change, environmental influences and an increasing awareness of sustainable products are leading to increased demands for new technologies to recycle plastics. Because of their large volumes in the market this applies to polyurethanes but also to polyisocyanurates.

Therefore, a strong need exists to provide efficient and sustainable processes for recycling of polyisocyanurates to recover valuable raw materials in good yield and good quality, i.e. a quality allowing their re-use, preferably as raw materials for new polyurethanes and polyisocyanurates. Object of the present invention, therefore, was to provide a new process for depolymerization of polyisocyanurates as well as processes to isolate and recover the recycled hydrolysis products, preferably for re-use to produce chemicals. In particular, it is an object of the present invention to provide a new process for depolymerization of polyisocyanurates, in which ring cleavage of the polyisocyanurates as well as cleavage of the urethane bonds takes place.

A particular subject of the invention was to provide processes that can be carried out in standard equipment, i.e. steel reactors.

Another specific problem of the invention was to provide processes that can be operated at lower temperatures with good yields.

Another specific subject of the invention was to provide a process, which allows easy separation of the hydrolysis reactants and catalysts from the recovered raw materials. The separation should be possible under mild conditions.

In another special subject of the invention was to provide a process with good yield and little side reactions. The process of the invention should allow that more than 85%, preferably more than 90%, particularly preferably more than 95%, even more preferably 100% of the existing isocyanurate groups of the raw material are cleaved. In this context, cleavage of isocyanurate groups means that the first bond of an isocyanurate group is broken and ring opening occurs.

The process of the invention should be applicable to polyisocyanurates having a high isocyanate index, preferably of more than or equal to 150, preferably > 150 and more preferred > 250.

A further specific problem to be solved by the invention was to provide a process that allows to recover polyols and/or amines and/or polyamines in a quality very close to that of the raw materials used to produce the polyisocyanurates that were subjected to hydrolysis. It should be possible to use recovered polyols and/or amines and/or polyamines in high proportions for production of new chemicals, preferably isocyanates, polyurethanes, polyisocyanurates or polyureas or for re-use in other applications like as epoxy curing agents or as crosslinkers for other polymers.

Another special subject of the invention was to provide a process being beneficial compared to the prior art in view of sustainability, in particular in view of a reduction or avoidance of inorganic salt waste.

Further problems solved by the present invention but not described before, can be derived from the subsequent description, examples, and claims.

The inventors surprisingly found out that a method of hydrolyzing a polyisocyanurate,
wherein
the polyisocyanurate being produced by reacting one or more polyol(s) selected from the group consisting of polyesterpolyol, mixture of polyesterpolyols, and mixture of polyester- and polyetherpolyols, with an excess of one or more isocyanate(s) selected from the group consisting of organic isocyanate, mixture of organic isocyanates, organic polyisocyanate mixture of organic polyisocyanates and a mixture of organic isocyanate(s) and organic polyisocyanate(s),
   and wherein
the polyisocyanurate is contacted with water in the presence of an organic amine base to yield:
   one or more carboxylic acid(s) comprising equal to or more than 2 carboxylic acid groups per molecule and corresponding to the carboxylic acid(s) used to prepare the polyesterpolyol(s) that was/were used to prepare the polyisocyanurate,
      and
   one or more polyol(s) corresponding to the polyol(s) used to prepare the polyesterpolyol(s) that was/were used to prepare the polyisocyanurate,
      and
   one or more organic amine and/or polyamine, which correspond(s) to the organic isocyanate or polyisocyanate used to prepare the polyisocyanurate,
      and wherein
   the reaction mixture comprising the polyisocyanurate, water and the organic amine base is a stirred homogeneous or heterogeneous mixture, preferably a solution or an emulsion or a dispersion or combinations thereof, during hydrolysis,
   allows to recover the raw materials used to prepare the polyisocyanurate, i.e. the carboxylic acid(s) and/or the polyol(s) and/or the organic amine and/or the organic polyamine in high yields and purities.

The process of the invention provides a particularly high cleavage rate of the existing isocyanurate groups of more than 85%, preferably more than 90%, particularly preferably more than 95%, even more preferably 100% based on the initial amount of isocyanurate groups that were present in the raw material. The percentage of the cleavage rate can be determined by disappearance of the signal at approximately 150 ppm in ¹³C NMR measured against TMS as a standard.

In addition to ring cleavage of the existing isocyanurate groups, the process of the invention leads to cleavage of the polyesterpolyols that were used to prepare the polyisocyanurates, into its raw materials, i.e. the corresponding carboxylic acid(s) and polyols(s) can be recovered. These reaction products can easily be separated from the obtained amines formed as further reaction product. Thus, recovery of the recycled raw materials in high purity could be achieved.

The recycled amine component of the isocyanurate, preferably an aromatic amine component, can for example be recovered in a purity that allows phosgenation to polyisocyanates. The polyol(s) and the carboxylic acid(s) are obtained in a purity that allows re-use for the production of polyurethanes or polyisocyanurates or use in other applications like polyesters. In particular fine-celled, uniform and low-interference foams can be produced with the recycled products, wherein these foams meet all market requirements in terms of e.g. density, strength, insulation performance or emissions. Advantageously the recycled products of the invention can be used to prepare new polyurethanes or polyisocyanurate foams without negatively affecting properties of the foam.

The method of the invention is particularly beneficial because it allows recycling of polyester polyol-based polyisocyanurate foams with a high isocyanate index of more than or equal to 150, preferably > 150 and more preferred > 250, which was not possible before.

A wide variety of organic amine bases, that can easily be separated from the reaction products, i.e. the carboxylic acid, polyol, and polyamine components, preferably by distillation or extraction, can be used in the process of the invention to effectively depolymerize polyisocyanurates.

The organic amine bases used in the present invention are non-ionic organic bases, i.e. are not in a salt form. Thus, the amounts of salts in the reaction solution, that needs to be separated and disposed is low.

The inventors surprisingly found out, that the organic amine bases used in the present invention can be used without addition of a phase transfer catalyst. This reduces the salt load of the reaction mixture and thus, efforts to separate and recover the reaction products. It further provides ecological and economic benefits due to the lower amounts of salts that must be disposed.

Even though the process of the invention can be carried out without a phase transfer catalyst, use of a phase transfer catalyst has shown to accelerate the process compared to a process without phase transfer catalyst in some systems. Phase transfer catalyst that can be added to the reaction mixture during hydrolysis are preferably selected from the group consisting of quaternary ammonium salts containing 6 to 30 carbon atoms and organic sulfonates containing at least 7 carbon atoms. Most preferred are quaternary ammonium salts containing 6 to 30 carbon atoms.

Depending on the preferences, lower salt load or shorter reaction times, the process of the invention is very flexible. Inventors found out, that if a phase transfer catalyst is used, it is preferred to use ammonium cations. Ammonium cations with a low number of carbon atoms, i.e. below 15, can be effectively used as well as such with a higher number of carbon atoms, i.e. 15 to 30. Use of such phase transfer catalysts allows to increase the yields and increases flexibility with regard to the reaction temperature.

The organic amine bases used in the present invention are non-corrosive, thus the process of the invention can be carried out in standard equipment under low or non-corrosive conditions.

Further benefits will be apparent from the subsequent description, examples, claims and figures.

### Detailed Description

Before describing the invention in more details, some important terms are defined as follows:
The verb "to comprise" as is used in the description, examples and the claims and its conjugation is used in its non-limiting sense to mean that items following the word are included, but items not specifically mentioned are not excluded. "Comprising" includes "consisting of" meaning that items following the word "comprising", are included without any additional, not specifically mentioned items, as preferred embodiment.

Reference to an element be the indefinite article "a" or "an" does not exclude the possibility that more than one of the elements is present, unless the context clearly requires that there is one and only one of the elements. The indefinite article "a" or "an" thus usually means "one or more".

The terms "catalyst" and "activating agent" are used synonymously in the present invention.

Polyurethane (PU) in the context of the present invention is especially understood to mean a product obtainable by reaction of polyisocyanates and polyols, or compounds having isocyanate-reactive groups. The polyurethanes can be prepared from active hydrogen-containing polyethers and polyisocyanates. Polyurethanes of this type are well known and are described, for example, in Ulrich, "Urethane Polymers", in Encyclopedia of Chemical Technology, Vol. 23, pp. 576-608(1983) and Backus et al., "Polyurethanes", in Encyclopedia of Polymer Science and Technology, Vol. 13, pp. 243-303(1988).

Polyisocyanurate (PIR) in the context of the present invention is understood to mean a product obtainable by reaction of a polyol component with an excess of a polyisocyanate component, wherein the polyol component comprises polyester polyols or mixtures of polyester and polyether polyols. Preferably the isocyanate index of the PIR being 150 or more. During the reaction of the polyol component with an excess of the polyisocyanate component urethane structures are formed, arising as a result of the reaction of isocyanates with compounds having reactive hydrogen atoms of the polyol component, and, via reaction of the isocyanate groups with one another, there is formation of isocyanurate structures or further structures that result from the reaction of isocyanate groups with other groups, for example polyurethane groups. Polyisocyanurates have likewise long been known and described in the prior art.

The isocyanate index as used in the present invention is to be understood as the mole ratio of the polyisocyanate component to polyol component multiplied with 100 or in other words the mole ratio of isocyanate groups to isocyanate reactive groups multiplied with 100.

Preferably rigid PIR foam is used in the present. "Rigid foam" is a fixed technical term. The well-known and fundamental difference between soft foam and rigid foam is that a soft foam shows an elastic behavior and therefore the deformation is reversible. Rigid foam, on the other hand, is permanently deformed. Further information on rigid foams can also be found in the "Kunststoff-handbuch, Band 7, Polyurethane", Carl Hanser Verlag, 3rd edition 1993, chapter 6. The terms "hart foam" or "rigid foam" are handled synonymously in the sense of this invention.

The process of the invention is a method of hydrolyzing a polyisocyanurate, characterized in that the polyisocyanurate is produced by reacting one or more polyol(s) selected from the group consisting of polyesterpolyol, mixture of polyesterpolyols and mixture of polyester- and polyetherpolyols, with an excess of one or more isocyanate(s) selected from the group consisting of organic isocyanate, mixture of organic isocyanates, organic polyisocyanate mixture of organic polyisocyanates and mixture of organic isocyanate(s) and organic polyisocyanate(s),
and that
the polyisocyanurate is contacted with water in the presence of an organic amine base to yield:
   one or more carboxylic acid(s) comprising equal to or more than 2 carboxylic acid groups per molecule and corresponding to the carboxylic acid(s) used to prepare the polyesterpolyol(s) that was/were used to prepare the polyisocyanurate,
      and
   one or more polyol(s) corresponding to the polyol(s) used to prepare the polyesterpolyol(s) that was/were used to prepare the polyisocyanurate,
      and
   one or more organic amine and/or polyamine, which correspond(s) to the organic isocyanate or polyisocyanate used to prepare the polyisocyanurate,
      and that
   the reaction mixture comprising the polyisocyanurate, water and the organic amine base is a stirred homogeneous or heterogeneous mixture, preferably a solution or an emulsion or a dispersion or combinations thereof, during hydrolysis.

A preferred PIR, more preferred a PIR foam, even more preferred a rigid PIR foam, used in the process of the invention is produced by reacting
a) One or more polyol(s) selected from the group consisting of polyesterpolyol or a mixture of polyesterpolyols or a mixture of a polyester- and a polyetherpolyol and comprising isocyanate-reactive groups selected from OH groups, SH groups, NH groups, NH₂ groups and mixtures thereof, preferably OH groups, with
b) an excess of one or more isocyanate(s) selected from the group consisting of organic isocyanate, mixture of organic isocyanates, organic polyisocyanate, mixture of organic polyisocyanates and mixture of organic isocyanate(s) and organic polyisocyanate(s),
   in the presence of
c) a catalyst catalyzing the reaction of the isocyanate reactive groups with the isocyanate groups and / or the reaction of isocyanate groups with each other, with the proviso that at least one trimerization catalyst is comprised
d) optionally a foam stabilizer
e) optionally a propellant
f) optionally further additives

Preferably the at least one polyol comprising 2 or more isocyanate-reactive groups selected from group consisting of OH groups, SH groups, NH groups, NH₂ groups and mixtures thereof, preferably OH groups. More preferred the polyol or the mixture of polyol(s) used in step a) having in sum on an average 1.8 to 8, preferably 1.9 to 5, more preferred 2 to 3 and most preferred 2 of said isocyanate-reactive groups and on an average 2 to 12, preferably 2 to 10, more preferred 2 to 6 carbon atoms. A functionality that is not an integer, e.g. 1.8, can result from the fact that at least one polyol with a higher functionality, e.g. greater than or equal to 2, is mixed with at least one polyol with a functionality of e.g. 1.

The polyol(s) may comprise ether and/or carbonate functional groups, preferably polyetherpolyol or polyethercarbonatpolyol.

Preferably polyester polyols based on esters of polybasic aliphatic or aromatic carboxylic acids, or a mixture of aromatic and aliphatic carboxylic acids, wherein the carboxylic acid(s) having 2 or 3, more preferred 2 carboxylic acid groups and having 2 to 12, preferably 4 to 10, more preferred 6 to 10 carbon atoms per molecule, are used in step a). Preferred aliphatic carboxylic acids are succinic acid, glutaric acid, adipic acid, suberic acid, azelaic acid, sebacic acid, decanedicarboxylic acid, maleic acid and fumaric acid and preferred aromatic carboxylic acids are phthalic acid, preferably (ortho)-phthalic acid, isophthalic acid, terephthalic acid and the isomeric naphthalenedicarboxylic acids. The polyester polyols are obtained by condensation of these polybasic carboxylic acids with polyols, i.e. polyhydric alcohols, preferably diols or triols having 2 to 12, more preferred 2 to 6, carbon atoms. Particular preferred are diols on the basis of glycol and/or glycol ether having a molecular weight below 180 g/mol, preferably below 140 g/mol, most preferred are monoethylene glycol and/or diethylene glycol. Preferably the polyester polyols used in the to produce PIR contain an excess of the polyhydric alcohols, so that they can also be present in unbound form in the polyol component. Particular preferred polyester polyols comprise a high content of aromatic monomers. PIR made from such polyester polyols exhibit very high flame retardancy.

In a preferred embodiment at least 90 wt.-%, preferably at least 95 wt.-%, more preferably at least 98 wt.-% of the polyol components used to prepare the polyisocyanurate are polyesterpolyols having a hydroxyl number of 100 to 450 mg KOH / g, preferably 120 to 400 mg KOH / g, more preferably 140 to 350 mg KOH / g measured according to DIN 53240.

Beside of polyester polyols one or more polyol selected from the group consisting of polyether polyols, polyether polycarbonate polyols, natural oil-based polyols (NOPs; described in WO 2005/033167, US 2006/0293400, WO 2006/094227, WO 2004/096882, US 2002/0103091, WO 2006/116456, EP 1678232), filled polyols and prepolymer-based polyols, can be used in step a).

As isocyanates b) all isocyanates or polyisocyanates containing at least two isocyanate groups can be used. Suitable isocyanates and polyisocyanates for the purposes of this invention are all organic isocyanates having two or more isocyanate groups. It is generally possible to use aliphatic, cycloaliphatic, arylaliphatic with 2 or more, preferably 2 to 4 isocyanate groups and mixtures thereof. Such aromatic polyfunctional isocyanates are known per se. Preferably used are alkylene diisocyanates having 4 to 12 carbon atoms in the alkylene radical, e.g. dodecane 1,12-diisocyanate, 2-ethyltetramethylene 1,4-diisocyanate, 2-methylpentamethylene 1,5-diisocyanate, tetramethylene 1,4-diisocyanate, pentamethylene diisocyanate (PDI) and preferably hexamethylene 1,6-diisocyanate (HMDI), cycloaliphatic diisocyanates such as cyclohexane 1,3- and 1,4-diisocyanate and also any mixtures of these isomers, 4,4'-Methylenedicyclohexyldiisocyanat (H12MDI), 1-isocyanato-3,3,5-trimethyl-5-isocyanatomethylcyclohexane (isophorone diisocyanate or IPDI for short), hexahydrotolylene 2,4- and 2,6-diisocyanate and also the corresponding isomer mixtures, and preferably aromatic diisocyanates and polyisocyanates, for example toluene 2,4- and 2,6-diisocyanate (TDI) and the corresponding isomer mixtures, naphthalene diisocyanate, diethyltoluene diisocyanate, mixtures of diphenylmethane 4, 4', 2,4'- and 2,2'-diisocyanates (MDI) and polyphenylpolymethylene polyisocyanates (PMDI, also known as polymeric and crude MDI) and and their higher condensed analogues with an average functionality of 2 to 4. Further examples are mixtures of crude MDI and toluene diisocyanates (TDI). The organic diisocyanates and polyisocyanates may be used individually or in the form of mixtures thereof. It is likewise possible to use corresponding "oligomers" of the diisocyanates (IPDI trimer based on isocyanurate, biurets, uretdiones). In addition, the use of prepolymers based on the abovementioned isocyanates is possible. It is also possible to use isocyanates modified by the incorporation of urethane, uretdione, isocyanurate, allophanate and other groups, so-called modified isocyanates. Examples of particularly suitable isocyanates are also listed, for example, in EP 1712578, EP 1161474,

WO 00/58383, US 2007/0072951, EP 1678232 and WO 2005/085310.

Most preferred are organic polyisocyanates isomers of toluene diisocyanate (toluene 2,4- and 2,6-diisocyanate (TDI), in pure form or as isomer mixtures of varying composition), diphenylmethane 4,4'-diisocyanate (MDI), "crude MDI" or "polymeric MDI" (comprising the 4,4' isomer and also the 2,4' and 2,2' isomers of MDI and products having more than two rings) and also the two-ring product referred to as "pure MDI" that is composed predominantly of 2,4' and 4,4' isomer mixtures, and prepolymers derived therefrom. Examples of particularly suitable isocyanates are detailed, for example, in EP 1712578, EP 1161474, WO 00/58383, US 2007/0072951, EP 1678232 and WO 2005/085310.

As catalyst(s) c) are all compounds capable of accelerating the reaction of isocyanates with OH functions, NH functions or other isocyanate-reactive groups and with isocyanates themselves can be used. It is possible here with preference to make use of customary catalysts known in the art, including, for example, amines (cyclic, acyclic; monoamines, diamines, oligomers having one or more amino groups), ammonium compounds, organometallic compounds and metal salts, preferably those of potassium, tin, iron, zinc or bismuth. It is also preferred to use mixtures of more than one of these catalysts.

Foam stabilizers (d) and their use in the production of PIR foams are known to those skilled in the art. As foam stabilizers, in particular, surface-active compounds (surfactants) can be used. Even though the use of foam stabilizers is optional, they are preferably used in the production of PIR foams. They can be used to optimize the desired cell structure and the foaming process. These compounds are swell known in the art. Siloxanes are described, for example, in the following patent specifications, but the use is only described in classic PU foams (e.g. as molded foam, mattress, insulation material, building foam, etc.): CN 103665385, CN 103657518, CN 103055759, CN 103044687, US 2008/0125503, US 2015/0057384, EP 1520870 A1, EP 1211279, EP 0867464, EP 0867465, EP 0275563. In addition to surface-active Si-containing compounds, Si-free surfactants can also be used. For example, in EP 2295485 A1 the use of lecithin and in US 3746663 the use of vinylpyrrolidone-based structures as a foam stabilizer, but only for the production of PU rigid foam, is described. Further Si-free foam stabilizers are described, for example, in EP 2511328 B1, DE 1020011007479 A1, DE 3724716 C1, EP 0734404, EP 1985642, DE 2244350 and US 5236961.

The use of blowing agents to produce PIR foams is also well known in the art. It is possible to work with chemical and physical blowing agents. The choice of blowing agent strongly dependents on the nature of the system. Depending on the amount of blowing agent used, a foam with high or low density is produced. Thus, foams with densities of 5 kg / m³ to 900 kg / m³, preferably 5 to 350, more preferably 8 to 200 kg / m³, in particular 8 to 150 kg / m³ can be prepared.

Preferred physical blowing agents used may be corresponding compounds having appropriate boiling points. Examples of blowing agents are liquefied CO₂, nitrogen, air, volatile liquids, for example hydrocarbons having 3, 4 or 5 carbon atoms, preferably cyclo-, iso- and n-pentane, hydrofluorocarbons, preferably HFC 245fa, HFC 134a and HFC 365mfc, hydrochlorofluorocarbons, preferably HCFC 141b, hydrofluoroolefins (HFOs) or hydrohaloolefins such as for example 1234ze, 1234yf, 1233zd(E) or 1336mzz, oxygen-containing compounds such as methyl formate, cetones, preferably acetone, ethers, preferably dimethoxymethane, or chlorinated hydrocarbons, preferably dichloromethane and 1,2-dichloroethane.

It is likewise optionally possible to use chemical blowing agents which react with NCO groups to liberate gases, for example water or formic acid. As chemical blowing agents, one or more compounds can be used that react with NCO groups by releasing gases, such as water or formic acid, or by the temperature rise during the reaction release gases such as sodium bicarbonate.

Optional additives f) that may be comprised in PIR include all substances which are known from the prior art and are used in the production of polyisocyanurates, especially polyisocyanurate foams, for example crosslinkers and chain extenders, stabilizers against oxidative degradation (known as antioxidants), flame retardants, surfactants, biocides, cell-refining additives, cell openers, solid fillers, antistatic additives, nucleating agents, thickeners, dyes, pigments, colour pastes, fragrances, and emulsifiers, etc.

The process for producing rigid PIR foams can be conducted by known methods, for example by manual mixing or preferably by means of foaming machines. If the process is carried out by using foaming machines, it is possible to use high-pressure or low-pressure machines.

The polyisocyanurate used in the process of the invention preferably has an isocyanate index of equal to or more than 150, preferably >180, more preferred > 250, most preferred > 250 to 500. Such polyisocyanurates are particular stable and having a very high chemical resistance and/or flame retardancy. They, thus, show the highest market potential for the inventive PIR recycling process.

In the process of the invention, the polyisocyanurate is contacted with water in the presence of an organic amine base.

Preferred organic amine bases are selected from the group consisting of aliphatic amines, aromatic amines, heteroaromatic amines and mixtures thereof, more preferably the organic amine base is an aliphatic amine comprising one or more tertiary nitrogen atom(s) and/or having a boiling point below that of at least one, preferably more than one, more preferred all organic amines obtained as product of the polyisocyanurate hydrolysis.

A wide variety of organic amine bases, that can easily be separated from the reaction products of the PIR hydrolysis, preferably by distillation or extraction, can be used in the process of the invention to effectively depolymerize PIR.

Preferably, the organic amine bases are used as non-ionic organic bases in the process of the invention. "Non-ionic" means that the base is not in the form of a salt before being added to the reaction mixture, i.e. does not comprise an anion and a cation. "Organic amine bases" are compounds which, in addition to carbon and hydrogen contain nitrogen and react to salt-like compounds with acids. Preferably the "organic amine bases" comprise one or more CH bonds.

The organic amine base used in the present invention comprises one or more than one nitrogen atom(s). Said nitrogen atoms may be primary, i.e. NH₂R, secondary, i.e. NHR₂, and/or tertiary, i.e. NR₃, wherein R being an alkyl group. Preferably, the organic base comprises one or more than one tertiary nitrogen atom(s). Without being bound to any theory, applicants believe that tertiary nitrogen atoms do not form ureas when reacting with the polyurethane and thus, catalyze direct hydrolysis of the polyisocyanurate compared to primary or secondary amino groups.

In contrast to the use of inorganic bases, use of such organic amine bases present invention significantly reduces the amounts of salts in the reaction solution, that needs to be separated and disposed was significantly reduced and sustainability of the process increased. The inventors surprisingly found out, that the organic amine bases used in the present invention can be used without addition of a phase transfer catalyst, for example without addition a quaternary ammonium salt as phase transfer catalyst. This allows a further reduction of the salt load of the reaction mixture and provides additional ecological and economic benefits.

The organic amine bases used in the present invention are preferably aliphatic amines having a boiling point below that of at least one, preferably more than one, more preferred all organic polyamines produced as product of the PIR hydrolysis.

Use of aliphatic organic amine bases allows short reaction time and low temperature without decrease of polyol yield.

Preferred organic amine base(s) is/are selected from the group consisting of
- A base according to Formula (1)

   (((R³)₂N-R²)-(O-R¹)ₓ)_{y}-N(R⁴)_{z} (1)
wherein
the R¹ groups in the molecule may be identical or different, the R² groups in the molecule may be identical or different, the R³ groups in the molecule may be identical or different, and the R⁴ groups in the molecule may be identical or different and wherein
   - R¹: are identical or different and are independently from each other selected from the group consisting of linear or branched alkylene radicals with 1 to 10, preferably 2 to 6, more preferred 2 to 4 carbon atoms, most preferred ethylene, propylene or isopropylene
   - R²: are identical or different and are independently from each other selected from the group consisting of linear or branched alkylene or hydroxy alkylene radicals with 1 to 20, preferably 1 to 18, more preferred 2 to 6, even more preferred 2 to 4 carbon atoms and if R² is hydroxy alkylene R² comprises 1 to 5, preferably 1, 2 or 3, more preferred 1 or 2 and most preferred 1 hydroxy group(s), most preferred ethylene, propylene, butylene, hexamethylene, 2-hydroxypropylene or isopropylene
   - R³: are identical or different and are independently from each other selected from the group consisting of hydrogen, linear or branched alkyl groups with 1 to 6, preferably 1 to 4, more preferred 1, 2 or 3 carbon atoms, linear or branched hydroxy alkyl groups with 1 to 6, preferably 1 to 4, more preferred 1, 2 or 3 carbon atoms, (CH₂CH₂O)ᵤH, (CH₂CH₂CH₂O)ᵥH and (CH₂CH(CH₃)CH₂O)_{w}H, most preferred hydrogen, methyl, ethyl, propyl, isopropyl, hydroxymethyl, 2-hydroxyethyl, 3-hydroxypropyl, 2-hydroxypropyl, 2-hydroxyisopropyl,
   - R⁴: are identical or different and are independently from each other selected from the group consisting of hydrogen, linear or branched, cyclic or alicyclic alkyl groups with 1 to 20, preferably 1 to 18, more preferred 1 to 6, even more preferred 1 to 4, most preferred 1, 2 or 3 carbon atoms, linear or branched hydroxy alkyl groups with 1 to 6, preferably 1 to 4, more preferred 1, 2 or 3 carbon atoms and cycloalkyl residues having 6 to 18 carbon atoms, preferably 6 to 12, more preferred 6 to 10 and even more preferred 6 or 7 carbon atoms, (CH₂CH₂O)ᵤH, (CH₂CH₂CH₂O)ᵥH and (CH₂CH(CH₃)CH₂O)_{w}H, most preferred methyl, ethyl, propyl, butyl, pentyl, hexyl, heptyl, octyl, cyclohexyl, isopropyl, tertbutyl, cyclohexyl, methylcyclohexyl, 2-cyclohexyl-ethyl, hydroxymethyl, 2-hydroxyethyl, 3-hydroxypropyl, 2-hydroxypropyl, 6-hydroxyhexyl and 2-hydroxyisopropyl, and wherein
u = 1 to 14, preferably 1 to 6
v = 1 to 14, preferably 1 to 6
w = 1 to 14, preferably 1 to 6
x = 0 or 1
y = 0 to 3
z = 0 to 3, with the proviso that if z = 3, one, preferably two, more preferred all three R⁴ are not hydrogen,
y + z = 3
   - A base according to formula (2)

   (((R^{e})₂N-R⁵)ₐ(H)_{b}N)_{d}-CZ-(N(R⁷)₂)_{c} (2)
wherein
the R⁵ groups in the molecule may be identical or different, the residues R⁶ groups in the molecule may be identical or different and the residues R⁷ groups in the molecule may be identical or different and wherein
   - R⁵: are identical or different and are independently from each other selected from the group consisting of linear or branched alkylene radicals with 1 to 10, preferably 2 to 6, more preferred 2 to 4 carbon atoms, wherein one or more CH₂ groups may be replaced by O to form ether bonds, preferably R⁵ is ethylene, propylene or isopropylene
   - R⁶: are identical or different and are independently from each other selected from the group consisting of hydrogen, linear or branched alkyl groups with 1 to 6, preferably 1 to 4, more preferred 1, 2 or 3 carbon atoms, linear or branched hydroxy alkyl groups with 1 to 6, preferably 1 to 4, more preferred 1, 2 or 3 carbon atoms, (CH₂CH₂O)ᵤH, (CH₂CH₂CH₂O)ᵥH and (CH₂CH(CH₃)CH₂O)_{w}H, most preferred hydrogen, methyl, ethyl, propyl, isopropyl, hydroxymethyl, 2-hydroxyethyl, 3-hydroxypropyl, 2-hydroxypropyl, 2-hydroxyisopropyl,
   - R⁷: are identical or different and are independently from each other selected from the group consisting of hydrogen, linear or branched alkyl groups with 1 to 6, preferably 1 to 4, more preferred 1, 2 or 3 carbon atoms, linear or branched hydroxy alkyl groups with 1 to 6, preferably 1 to 4, more preferred 1, 2 or 3 carbon atoms, (CH₂CH₂O)ᵤH, (CH₂CH₂CH₂O)ᵥH and (CH₂CH(CH₃)CH₂O)_{w}H, most preferred hydrogen, methyl, ethyl, propyl, isopropyl, and
   wherein
Z = O or NH,
u = 1 to 14, preferably 1 to 6
v = 1 to 14, preferably 1 to 6
w = 1 to 14, preferably 1 to 6
a = 0, 1 or 2
b = 0, 1 or 2
a + b = 2
c = 0, 1 or 2
d = 0, 1 or 2
c + d = 2
   - cyclic or bicyclic, aromatic or non-aromatic, nitrogen comprising organic base comprising 4 to 20 carbon atoms, preferably 5 to 14, more preferred 5 to 12 and most preferred 6 to 10 carbon atoms and 1 to 4 nitrogen atoms, preferably 1 to 3, more preferred 1, 2 or 3 nitrogen atoms, optionally the cyclic or bicyclic, aromatic or non-aromatic, nitrogen comprising organic base comprises one or more O atoms and/or carries one or more substituents, such as linear or branched alkyl or alkenyl groups with 1 to 6, preferably 1 to 4, more preferred 1, 2 or 3 carbon atoms, linear or branched hydroxy alkyl groups with 1 to 6, preferably 1 to 4, more preferred 1, 2 or 3 carbon atoms, (CH₂CH₂O)ᵤH, (CH₂CH₂CH₂O)ᵥH and (CH₂CH(CH₃)CH₂O)_{w}H, most preferred hydrogen, methyl, ethyl, propyl, isopropyl, hydroxymethyl, 2-hydroxyethyl, 3-hydroxypropyl, 2-hydroxypropyl, 2-hydroxyisopropyl or one or more N and or O comprising functional groups and/or two or more cyclic or bicyclic non-aromatic, nitrogen comprising organic rings are bond to each other via alkylene or ether alkylene linkages with 1 to 12, preferably 1 to 6 carbon atoms,
   - and mixtures thereof.

Most preferred the organic amine base(s) is/are selected from the group consisting of
- A trialkylamine according to Formula (3), as preferred embodiment of Formula (1),

   NR⁴R⁴'R⁴" (3)

with R⁴, R⁴', R⁴" are identical or different and are independently selected from the group consisting of hydrogen, linear or branched, cyclic or alicyclic alkyl groups with 1 to 20, preferably 1 to 18, more preferred 1 to 6, even more preferred 1 to 4, most preferred 1, 2 or 3 carbon atoms, linear or branched hydroxy alkyl groups with 1 to 6, preferably 1 to 4, more preferred 1, 2 or 3 carbon atoms and cycloalkyl residues having 6 to 18 carbon atoms, preferably 6 to 12, more preferred 6 to 10 and even more preferred 6 or 7 carbon atoms, (CH₂CH₂O)ᵤH, (CH₂CH₂CH₂O)ᵥH and (CH₂CH(CH₃)CH₂O)_{w}H, most preferred methyl, ethyl, propyl, butyl, pentyl, hexyl, heptyl, octyl, cyclohexyl, isopropyl, tertbutyl, cyclohexyl, methylcyclohexyl, 2-cyclohexyl-ethyl, hydroxymethyl, 2-hydroxyethyl, 3-hydroxypropyl, 2-hydroxypropyl, 6-hydroxyhexyl and 2-hydroxyisopropyl,
u = 1 to 14, preferably 1 to 6
v = 1 to 14, preferably 1 to 6
w = 1 to 14, preferably 1 to 6,
with the proviso that one, preferably two, more preferred all three of R⁴, R^{4'} and R^{4"} are not hydrogen.
   - A polyamine according to Formula (4), as another preferred embodiment of Formula (1),

      ((R³)₂N-R²)₃N (4),
wherein
   - R²: are identical or different and are independently from each other selected from the group consisting of linear or branched alkylene or hydroxy alkylene radicals with 1 to 20, preferred 1 to 18, more preferred 2 to 6, even more preferred 2 to 4 carbon atoms and if R² is hydroxyalkyl R² comprises 1 to 5, preferably 1, 2 or 3, more preferred 1 or 2 and most preferred 1 hydroxy group(s), most preferred ethylene, propylene or isopropylene
   - R³: are identical or different and are independently from each other selected from the group consisting of hydrogen, linear or branched alkyl groups with 1 to 6, preferably 1 to 4, more preferred 1, 2 or 3 carbon atoms, linear or branched hydroxy alkyl groups with 1 to 6, preferably 1 to 4, more preferred 1, 2 or 3 carbon atoms, (CH₂CH₂O)ᵤH, (CH₂CH₂CH₂O)ᵥH and (CH₂CH(CH₃)CH₂O)_{w}H, most preferred hydrogen, methyl, ethyl, propyl, isopropyl, hydroxymethyl, 2-hydroxyethyl, 3-hydroxypropyl, 2-hydroxypropyl, 2-hydroxyisopropyl,
u = 1 to 14, preferably 1 to 6
v = 1 to 14, preferably 1 to 6
w = 1 to 14, preferably 1 to 6
   - A polyamine according to Formula (5), as further preferred embodiment of Formula (1),

   (((R³)₂N-R²)-(O-R¹)ₓ)_{y}-N(R⁴)_{z} (5)
wherein x = 0 or 1, y = 1 or 2 and z = 1 or 2 and y + z = 3 and wherein
   - R¹: are identical or different and are independently from each other selected from the group consisting of linear or branched alkylene radicals with 1 to 10, preferably 2 to 6, more preferred 2 to 4 carbon atoms, most preferred ethylene, propylene or isopropylene,
   - R²: are identical or different and are independently from each other selected from the group consisting of linear or branched alkylene or hydroxy alkylene radicals with 1 to 20, preferably 1 to 18, more preferred 2 to 6, even more preferred 2 to 4 carbon atoms and if R² is hydroxyalkyl R² comprises 1 to 5, preferably 1, 2 or 3, more preferred 1 or 2 and most preferred 1 hydroxy group(s), most preferred ethylene, propylene, butylene, hexamethylene, 2-hydroxypropylene or isopropylene,
   - R³: are identical or different and are independently from each other selected from the group consisting of hydrogen, linear or branched alkyl groups with 1 to 6, preferably 1 to 4, more preferred 1, 2 or 3 carbon atoms, linear or branched hydroxy alkyl groups with 1 to 6, preferably 1 to 4, more preferred 1, 2 or 3 carbon atoms, (CH₂CH₂O)ᵤH, (CH₂CH₂CH₂O)ᵥH and (CH₂CH(CH₃)CH₂O)_{w}H, most preferred hydrogen, methyl, ethyl, propyl, isopropyl,
   - R⁴: are identical or different and are independently from each other selected from the group consisting of hydrogen, linear or branched, cyclic or alicyclic alkyl groups with 1 to 6, preferably 1 to 4, more preferred 1, 2 or 3 carbon atoms, linear or branched hydroxy alkyl groups with 1 to 6, preferably 1 to 4, more preferred 1, 2 or 3 carbon atoms, (CH₂CH₂O)ᵤH, (CH₂CH₂CH₂O)ᵥH and (CH₂CH(CH₃)CH₂O)_{w}H, most preferred methyl, ethyl, propyl, butyl, pentyl, hexyl, heptyl, octyl, cyclohexyl, isopropyl, tertbutyl, cyclohexyl, methylcyclohexyl, 2-cyclohexyl-ethyl, hydroxymethyl, 2-hydroxyethyl, 3-hydroxypropyl, 2-hydroxypropyl, 6-hydroxyhexyl and 2-hydroxyisopropyl
u = 1 to 14, preferably 1 to 6
v = 1 to 14, preferably 1 to 6
w = 1 to 14, preferably 1 to 6
   - A polyaminoalkylurea according to Formula (6), as preferred embodiment of Formula (2),

   (((R⁶)₂N-R⁵)ₐ(H)_{b}N)_{d}-CO-(N(R⁷)₂)_{c} (6)
wherein
   - R⁵: are identical or different and are independently from each other selected from the group consisting of linear or branched alkylene radicals with 1 to 10, preferably 2 to 6, more preferred 2 to 4 carbon atoms, wherein one or more CH₂ groups may be replaced by O to form ether bonds, preferably R⁵ is ethylene, propylene or isopropylene
   - R⁶: are identical or different and are independently from each other selected from the group consisting of hydrogen, linear or branched alkyl groups with 1 to 6, preferably 1 to 4, more preferred 1, 2 or 3 carbon atoms, linear or branched hydroxy alkyl groups with 1 to 6, preferably 1 to 4, more preferred 1, 2 or 3 carbon atoms, (CH₂CH₂O)ᵤH, (CH₂CH₂CH₂O)ᵥH and (CH₂CH(CH₃)CH₂O)_{w}H, most preferred methyl, ethyl, propyl, isopropyl, hydroxymethyl, 2-hydroxyethyl, 3-hydroxypropyl, 2-hydroxypropyl, 2-hydroxy isopropyl,
   - R⁷: are identical or different and are independently from each other selected from the group consisting of hydrogen, linear or branched alkyl groups with 1 to 6, preferably 1 to 4, more preferred 1, 2 or 3 carbon atoms, linear or branched hydroxy alkyl groups with 1 to 6, preferably 1 to 4, more preferred 1, 2 or 3 carbon atoms, (CH₂CH₂O)ᵤH, (CH₂CH₂CH₂O)ᵥH and (CH₂CH(CH₃)CH₂O)_{w}H, most preferred hydrogen, methyl, ethyl, propyl, isopropyl, hydroxymethyl, 2-hydroxyethyl, 3-hydroxypropyl, 2-hydroxypropyl, 2-hydroxyisopropyl, and
   wherein
u = 1 to 14, preferably 1 to 6
v = 1 to 14, preferably 1 to 6
w = 1 to 14, preferably 1 to 6
a = 0, 1 or 2
b = 0, 1 or 2
a + b = 2
c = 0, 1 or 2
d = 0, 1 or 2
c + d = 2,
   - An organic base a guanidino group according to Formula (7), as further preferred embodiment of Formula (2),

   (((R₆)₂N-R₅)ₐ(H)_{b}N)_{d}-C(NH)-(N(R₇)₂)_{c} (7)
wherein
   - R⁵: are identical or different and are independently from each other selected from the group consisting of linear or branched akylene radicals with 1 to 10, preferably 2 to 6, more preferred 2 to 4 carbon atoms, wherein one or more CH₂ groups may be replaced by O to form ether bonds, preferably R⁵ is ethylene, propylene or isopropylene
   - R⁶: are identical or different and are independently from each other selected from the group consisting of hydrogen, linear or branched alkyl groups with 1 to 6, preferably 1 to 4, more preferred 1, 2 or 3 carbon atoms, linear or branched hydroxy alkyl groups with 1 to 6, preferably 1 to 4, more preferred 1, 2 or 3 carbon atoms, (CH₂CH₂O)ᵤH, (CH₂CH₂CH₂O)ᵥH and (CH₂CH(CH₃)CH₂O)_{w}H, most preferred methyl, ethyl, propyl, isopropyl, hydroxymethyl, 2-hydroxyethyl, 3-hydroxypropyl, 2-hydroxypropyl, 2-hydroxyisopropyl,
   - R⁷: are identical or different and are independently from each other selected from the group consisting of hydrogen, linear or branched alkyl groups with 1 to 6, preferably 1 to 4, more preferred 1, 2 or 3 carbon atoms, linear or branched hydroxy alkyl groups with 1 to 6, preferably 1 to 4, more preferred 1, 2 or 3 carbon atoms, (CH₂CH₂O)ᵤH, (CH₂CH₂CH₂O)ᵥH and (CH₂CH(CH₃)CH₂O)_{w}H, most preferred methyl, ethyl, propyl, isopropyl, and wherein
u = 1 to 14, preferably 1 to 6
v = 1 to 14, preferably 1 to 6
w = 1 to 14, preferably 1 to 6
a = 0, 1 or 2
b = 0, 1 or 2
a + b = 2
c = 0, 1 or 2, preferably 0 or 1, more preferred 0
d = 0, 1 or 2, preferably 1 or 2, more preferred 2
c + d = 2,
   - and mixtures thereof.

Most preferred organic amine bases are selected from the group consisting of triethylamine, tripropylamine, N,N dimethyl-N-propylamine, N,N-dimethyl-N-butylamine, N,N-dimethyl-N-pentyl-amine, N,N- dimethyl-N-hexylamine, N,N-dimethyl-N-cyclohexylamine, N,N-dimethyl-N-heptylamine, N,N-dimethyl-N-octylamine, N,N-diethyl-N-propylamine, N,N-diethyl-N-butylamine, N,N-diethyl-N-pentylamine, N,N-diethyl-N-hexylamine, N,N-diethyl-N-cyclohexylamine, N,N-diethyl-N-heptylamine, N,N-diethyl-N-octylamine, tetramethylethylenediamine (TMEDA), tetramethyl-1,3-propylenediamine (TMPDA), tetramethyl-1,4-butylenediamine (TMBDA), tetramethyl-1,6-hexamethylenediamine (TMHMDA), pentamethyldiethylenetriamine (PMDETA), N,N,N'N'-tetramethyl-bis(aminoethyl) ether, N,N'-dimethyl-piperazine, 1,4-diazabicyclo (2,2,2)octane (TEDA), trimethyl-triaza-cyclononane (TACN); dimethylethanolamine, dimethylaminoethoxyethanol, N,N-dimethylaminoethyl-N'-methyl-ethanolamine, tetramethylguanidine, N,N-bis(3-dimethylamino-propyl)-N-(2-hydroxypropyl) amine, N,N-dimethyl-N',N'-bis(2-hydroxypropyl)-1,3-propylenediamine, dimethylaminopropylamine (DMAPA); N-methyl-N-2-hydroxypropyl-piperazine, bis(dimethylaminopropyl)-amine, dimethylaminopropyl urea, N,N'-bis(3-dimethylaminopropyl) urea, 1,3-bis(dimethylamino)-2-propanol, 6-dimethylamino-1-hexanol, N,N'-bis(2-hydroxypropyl) piperazine, N-(2-hydroxypropyl)-morpholine, 1,2-dimethylimidazole, 1-ethylimidazole, N-methyl-pyrrolidine, N-ethyl-pyrrolidine, N-(2-hydroxyethyl)-pyrrolidine, N-(2-hydroxypropyl)-pyrrolidine, N-propyl-pyrrolidine, N-allyl-pyrrolidine, N-methyl-piperidine, N-ethyl-piperidine, N-(2-hydroxyethyl)-piperidine, N-(2-hydroxypropyl)-piperidine, N-propyl-piperidine, N-allyl-piperidine and their mixtures.

Instead of aliphatic amines aromatic amines can be used in the present invention. Preferably aromatic amines that correlate to the isocyanates used to prepare the PIR are used. Such process is beneficial because the amines used as hydrolysis catalyst are the same as the recovered amines from the PIR and do not need to be separated from each other. The amines formed during hydrolysis can function as co-catalyst together with the amine base added to the reaction mixture. This allows to reduce the amount of amine base that has to be added to the reaction mixture. In addition, amines recovered from the process of the invention can be re-used as hydrolysis catalyst in the inventive process.

Further preferred the following aromatic amine catalysts can be used are selected from the group consisting of anilines, preferably dimethylaniline and 4,4'-Methylenedianiline (MDA), pyridines and imidazolines, like 1,3-Dimethyl-2-imidazolidinon (DMI). These aromatic amine catalysts are less sensitive to oxidation than aliphatic amines. Side products formed due to oxidation processes like for instance DMF or formaldehyde are less likely formed.

Use of the amine bases described before allows to run the process of the invention in standard equipment, preferably in steel reactors, without special corrosion protection and thus, significantly contributes to a reduction of the invest costs for the plants. It is also possible to use very cheap bases that contribute to reduced operating costs.

The amount of organic amine base in the reaction mixture must be sufficient to catalyze the desired hydrolysis of the polyisocyanurate at a practicable rate. Preferably the amine is used in stoichiometric amounts compared to the polyisocyanurate or an excess of amine is used. More preferred the weight ratio of the sum of the organic amine bases to polyisocyanurate is in the range of from 1 : 100 to 50 : 1, preferably 1 : 50 to 25 : 1, more preferred 1 : 10 to 20 : 1, even more preferred 1 : 5 to 10 : 1, and most preferred 1 : 2 to 3 : 1. Preferably the base is used in form of a base solution comprising a base and water, even more preferred as a saturated base solution.

Even though the PIR can be reacted with an amine and water in the process of the invention, it is also possible to contact the polyisocyanurate with water in the presence of an organic amine base and a phase transfer catalyst, preferably a phase transfer catalyst selected from the group consisting of quaternary ammonium salts containing an ammonium cation and containing 6 to 30 carbon atoms, and organic sulfonates containing at least 7 carbon atoms. Use of a phase transfer catalyst has shown to increase yields of the reaction product and allows to conduct the reaction at lower temperatures and reduced reaction times.

A preferred quaternary ammonium salt used as phase transfer catalyst preferably has the general structure R₁ R₂ R₃ R₄ NX wherein R₁,R₂,R₃, and R₄ are the same or different and are hydrocarbyl groups selected from alkyl, aryl, and arylalkyl and X is selected from the group consisting of halide, preferably chloride and/or bromide, hydrogen sulfate, alkyl sulfate, preferably methylsulfate and ethylsulfate, carbonate, hydrogen carbonate, carboxylate, preferably acetate, or hydroxide.

More preferred R₁,R₂,R₃, and R₄ and X are defined as follows:
- R₁ and R₂ are the same or different and are alkyl groups with 1 to 12, preferably 1 to 10, more preferred 1 to 7, even more preferred 1 to 6, especially preferred 1 to 5 and most preferred 1 to 4 carbon atoms, wherein the alkyl groups may be linear, branched, cyclic, saturated or unsaturated, most preferred are linear, saturated alkyl groups,
- R₃ is selected from the group consisting of alkyl groups with 1 to 12, preferably 1 to 10, more preferred 1 to 7, even more preferred 1 to 6, especially preferred 1 to 5 and most preferred 1 to 4 carbon atoms, aryl groups with 6 to 14, preferably 6 to 12, and most preferred 6 to 10 carbon atoms, and aralkyl groups with 7 to 14, preferably 7 to 12, and most preferred 7 to 10 carbon atoms, wherein the alkyl groups may be linear, branched, cyclic, saturated or unsaturated, most preferred linear and,
- R₄ is selected from the group consisting of alkyl groups with 3 to 12, preferably 3 to 10, more preferred 3 to 7, most preferred 4 to 6 carbon atoms, aryl groups with 6 to 14, preferably 6 to 12, and most preferred 6 to 10 carbon atoms, and aralkyl groups with 7 to 14, preferably 7 to 12, and most preferred 7 to 10 carbon atoms, wherein the alkyl groups may be linear, branched, cyclic, saturated or unsaturated, most preferred linear and saturated, and
- X is selected from the group consisting of halide, preferably chloride and/or bromide, hydrogen sulfate, alkyl sulfate, preferably methylsulfate and ethylsulfate, carbonate, hydrogen carbonate, acetate or hydroxide.

Even more preferred R₁ to R₄ are selected from the definitions provided above such that the sum of carbon atoms in the quaternary ammonium cation is 6 to 14, preferably 7 to 14, more preferred 8 to 13
or
that the sum of carbon atoms in the quaternary ammonium cation is 15 to 30, preferably 15 to 28, more preferred 15 to 24, even more preferred 16 to 22 and most preferred 16 to 20.

Particular preferred R₁ to R₄ and X are selected such that the sum of carbon atoms in the quaternary ammonium salt is 6 to 14, preferably 7 to 14, more preferred 8 to 13,
or
R₁ to R₄ and X are selected such that the sum of carbon atoms in the quaternary ammonium salt is 15 to 30, preferably 15 to 28, more preferred 15 to 24, even more preferred 16 to 22 and most preferred 16 to 20.

Although the addition of even trace amounts of the phase transfer catalysts will accelerate the hydrolysis rate, it is preferred that at least 0.5 weight percent catalyst, based on the weight of the polyisocyanurate be used, more preferably 0.5 to 15 weight percent, even more preferred 1 to 10 weight percent, particular preferred more 1 to 8 weight percent, especially preferred 1 to 7 and most preferred 2 to 6 weight percent.

In another preferred embodiment one or more inorganic base(s) comprising an alkali metal cation and/or an earth alkaline metal cation, preferably inorganic base(s) comprising an alkali metal cation, is/are added to the reaction mixture during hydrolysis or after the hydrolysis has been completed in order to obtain alkali metal or earth alkaline metal or mixed alkali metal and earth alkaline metal salts of the one or more carboxylic acid(s) comprising equal to or more than 2 carboxylic acid groups per molecule and corresponding to the carboxylic acid(s) used to prepare the polyesterpolyol(s) that was/were used to prepare the polyisocyanurate, and which is formed during hydrolysis. It has shown that such alkali metal or earth alkaline metal or mixed alkali metal and earth alkaline metal salts, preferably alkali metal salts, of the one or more carboxylic acid(s) can be easier separated from the other components of the reaction solution than ammonium salts that are otherwise formed during the hydrolysis reaction. Without being bond to any theory, inventors believe that the better solubility in water of such alkali metal or earth alkaline metal or mixed alkali metal and earth alkaline metal salts contributes to this improvement.

Preferably alkali metal bases selected from the group consisting of alkali metal phosphates, alkali metal hydrogen phosphates, alkali metal carbonates, alkali metal silicates, alkali metal hydrogen carbonates, alkali metal acetates, alkali metal sulfites, ammonium hydroxide, and mixtures thereof are used. More preferred the alkali metals are selected from the group consisting of Na, K and Li and mixtures thereof, most preferred Na and K and mixtures thereof.

Preferred the weight ratio of the sum of the inorganic bases to polyisocyanurate is in the range of from 5 : 1 to 1 : 120, preferably 4 : 1 to 1 : 80, more preferred 3 : 1 to 1 : 40, even more preferred 2 : 1 to 1 : 20, and most preferred 1 : 1 to 1 : 10. More preferred the amount of inorganic base is selected such that the one or more carboxylic acid(s) is/are quantitatively converted into alkali metal or earth alkaline metal or mixed alkali metal and earth alkaline metal salts, preferably alkali metal salts.

The inorganic bases can be added as solid substance or in aqueous solution to the reaction mixture. Preferably the inorganic base is used in form of a saturated aqueous base solution.

Water functions as a reactant in the inventive hydrolysis reaction and thus does not need to be present in stoichiometric excess relative to the isocyanurate functional groups in the polymer to be hydrolyzed, it will generally be desirable to utilize a substantial quantity of water in order that it may conveniently serve as a reaction medium and solvent or carrier for the strong base and activating agent. For these reasons, the water is preferably present in condensed (liquid) form. Typically, the weight ratio of PIR to water is from 3:1 to 1:15.

Preferably the polyisocyanurate is contacted with water and the organic amine base or with water, the organic amine and the phase transfer catalyst,
at a temperature of from 80°C to 220°C, preferably 100°C to 200°C, more preferred 120°C to 190°C and most preferred 140°C to 180°C
   and/or
for 1 minute to 48 hours, preferably 1 minute to 40 hours, more preferred 5 minutes to 35 hours, even more preferred 10 minutes to 30 hours, particular preferred 20 minutes to 24 hours, especially preferred 30 minutes to 18 hours and most preferred 30 minutes to 16 hours and/or
at atmospheric pressure or under pressure of 1 to 30 bar, 2 - 20 bar, more preferred 3 to 15 bar. These reaction conditions provide economic benefits in terms of energy consumption and space time yield. If the temperatures are too low conversion might be incomplete or reaction time will become too long. If the rection temperature is too high or the reaction time is expanded outside of the ranges given before, increased formation of side-products has been observed and energy consumption increased to an inacceptable level. The formation of side products can lead to unwanted coloration of the recovered products, which causes the need for additional purification steps. Conducting the reaction under elevated pressure has been found to shorten reaction time and allows to operate at lower temperatures.

To facilitate handling of the PIR, preferably PIR foam, it is preferably desirable to chop, pulverize, grind, or otherwise comminute the PIR such that it is in the form of relatively small particles or granules. If the PIR is a foam, it may be partially or fully compressed prior to contacting with the water and the organic amine base. If the PIR is in solid form, an initial pulverization step is highly advantageous so as to maximize the surface area available for reaction (thereby reducing the reaction time required to achieve the desired level of hydrolysis).

The process of this invention will result in the effective hydrolytic cleavage of the isocyanurate bonds present in the PIR being treated. Under the reaction conditions, the polyester polyols obtained after ring cleavage of the isocyanurate bonds are further hydrolyses to obtain the correlating carboxylic acids as well as polyols.

In the process of the invention, thus,
one or more carboxylic acid(s) comprising equal to or more than 2 carboxylic acid groups per molecule and corresponding to the carboxylic acid(s) used to prepare the polyesterpolyol(s)
that was/were used to prepare the polyisocyanurate,
   and
one or more polyol(s) corresponding to the polyol(s) used to prepare the polyesterpolyol(s)
that was/were used to prepare the polyisocyanurate,
   and
one or more organic amine and/or polyamine, which correspond(s) to the organic isocyanate
or polyisocyanate used to prepare the polyisocyanurate
   are obtained.

Preferably the one or more carboxylic acid(s) obtained after the hydrolysis is selected from the group consisting of phthalic acid, preferably (ortho)-phthalic acid, isophthalic acid, terephthalic acid and isomeric naphthalene dicarboxylic acids, succinic acid, glutaric acid, adipic acid, suberic acid, azelaic acid, sebacic acid, decandicarboxylic acid, maleic acid, fumaric acid and mixtures thereof.

Also preferred the one or more polyol(s) obtained after the hydrolysis is a diol on the basis of glycol and/or glycol ether having a molecular weight below 180 g/mol, preferably below 140 g/mol, particular preferred monoethylene glycol and/or diethylene glycol.

Further preferred the one or more organic amine and/or polyamine obtained after the hydrolysis is selected from the group consisting of dodecane 1,12-diamine, 2-ethyltetramethylene 1,4-diamine, 2-methylpentamethylene 1,5-diamine, tetramethylene 1,4-diamine, pentamethylene diamine (PDA) and preferably hexamethylene 1,6-diamine (HMDA), cycloaliphatic diamines such as cyclohexane 1,3- and 1,4-diamine and also any mixtures of these isomers, 4,4'-Methylenedicyclohexyldiiso-cyanate (H12MDI), 1-isocyanato-3,3,5-trimethyl-5-isocyanatomethylcyclohexane (isophorone diamine or IPDA for short), hexahydrotolylene 2,4- and 2,6-diamine and also the corresponding isomer mixtures, and preferably aromatic diamines and polyisocyanates, for example toluene 2,4-and 2,6-diamin (TDA) and the corresponding isomer mixtures, naphthalene diamine, diethyltoluene diamine, mixtures of diphenylmethane 4, 4', 2,4'- and 2,2'-diamines (MDA) and polyphenylpolymethylene polyamines and and their higher condensed analogues with an average functionality of 2 to 4.

The hydrolysis reaction may be carried out as a batch, continuous, or semi-continuous process in any appropriate vessel or other apparatus (for example, a stirred tank reactor or screw extruder). It will generally be preferred to agitate or stir the reaction components so as to assure intimate contact, rapid hydrolysis rates, and adequate temperature control.

The process of the present invention is beneficial compared to prior art processes because the hydrolysis reaction can be carried out as one step process. It is preferred that the PIR is not subjected to a reaction with a pure amine or pure water before being subjected to hydrolysis with water and the organic amine base or with water, the organic amine base und the phase transfer catalyst.

It is further preferred that the process of the invention does not comprise steps of isolating of reaction products of the organic amine base and the PIR followed by a subsequent hydrolysis of the isolated reaction products.

After completion of the hydrolysis step, it is preferred that the reaction products are separated from each other and optionally subjected to purification steps. Preferred separation and purification methods are selected from the group consisting of filtration, membrane separation, phase separation, chromatographic methods, distillation, extraction and combinations of said methods. Preferably the amine components, i.e. the amine base and/or the amines obtained as reaction product of the hydrolysis are separated from the other components via distillation or extraction, more preferred distillation.

The recovered products of the process of the invention, in particular the one or more carboxylic acid(s) and/or polyol(s) and/or organic amine(s) and/or polyamine(s), can be re-used for production of new chemical, preferably polyurethane, preferably polyurethane foam, or polyisocyanurates, preferably polyisocyanurate foams. The inventors found out that they can be used to produce polyurethane foams of PIR of high quality even without addition of virgin polyol. This is a significant achievement.

The recovered amines can be converted to organic polyisocyanates by conventional processes and similarly employed as components of polyurethanes or PIR.

### EXAMPLE

Preparation of PIR foam to be recycled

For the production of the PIR-foams, which were used for the hydrolysis trials described in the following Example 1, the formulation described in table 1 was used. The PIR-foam was produced by manual mixing. For this purpose, polyol, flame retardant, catalysts, water, foam stabilizer, blowing agent were weighed into a beaker and mixed by means of a disc stirrer (6 cm in diameter) at 1000 rpm for 30 s. The blowing agent quantity which had evaporated during the mixing operation was determined by reweighing and replenished. Subsequently, the isocyanate (MDI) was added, and the reaction mixture was stirred with the stirrer described at 3000 rpm for 5 s. In the case of pour-in-place foaming, foaming was effected in the beaker itself; otherwise, the mixture was transferred into a paper-lined box of base area 27 x 14 cm.

**Table 1: PIR formulation**

| **Component** | **Proportion by weight** |
|---|---|
| Polyesterpolyol* | 100 |
| Amine catalyst** | 0,5 |
| Trimerization catalyst*** | 3,5 |
| Foam stabilizer**** | 2 |
| Water | 0,6 |
| Flame retardant***** | 15 |
| Cyclopentane/Isopentane 70:30 | 8 |
| MDI****** | 263 |

| | |
|---|---|
| *Stepanpol^{®} PS 3152 from Stepan, OH-Zahl 315 mg KOH/g **POLYCAT^{®} 5 (Pentamethyldiethylenetriamine) from Evonik Operations GmbH ***KOSMOS^{®} 70 LO from Evonik Operations GmbH ****TEGOSTAB^{®} B 8411 from Evonik Operations GmbH ***** Fyrol^{®} PCF from ICL Industrial Products ******Polymeric MDI, 200 mPa*s, 31,5% NCO, Functionality 2,7. | |

### Example 1

PIR foam that was prepared as described above was grinded. 120 g of grounded PIR-foam was transferred together with 862 g of DABCO^{®} BL 19 (Bis-(2-dimethylaminoethyl)ether) and 218 g water into a 5 L-pressure reactor. The mixture was heated to 170 °C and stirred for 5 h. A pressure of about 11 bar was built up. A turbid brownish completely liquid product was obtained, which showed phase separation after standing upon 12 h. The C-NMR show only traces of urethane-, urea- and isocyanurate-groups and indicate a conversion rate of > 98 %.

### Example 2

PIR foam that was prepared as described above was grinded. 100 g of grounded PIR-foam was transferred together with 718 g of 1,2-Dimethylimidazol and 182 g water into a 2 L-pressure reactor. The mixture was heated to 170 °C and stirred for 5 h. A pressure of about 8-10 bar was built up. A turbid brownish completely liquid product was obtained. The C-NMR show only traces of urethane-, urea- and isocyanurate-groups and indicate a conversion rate of > 98 %.

### Example 3

PIR foam that was prepared as described above was grinded. 100 g of grounded PIR-foam was transferred together with 718 g of POLYCAT^{®} 206 (a tertiary amine catalyst) and 182 g water into a 2 L-pressure reactor. The mixture was heated to 170 °C and stirred for 5 h. A pressure of about 15-17 bar was built up. A turbid yellowish completely liquid product was obtained, which showed phase separation after standing. The C-NMR show only traces of urethane-, urea- and isocyanurate-groups and indicate a conversion rate of > 98 %.

## Claims

1. A method of hydrolyzing a polyisocyanurate,
**characterized in that**
the polyisocyanurate is produced by reacting one or more polyol(s) selected from the group consisting of polyesterpolyol, mixture of polyesterpolyols and mixture of polyester- and polyetherpolyols, with an excess of one or more isocyanate(s) selected from the group consisting of organic isocyanate, mixture of organic isocyanates, organic polyisocyanate mixture of organic polyisocyanates and a mixture of organic isocyanate(s) and organic polyisocyanate(s),
and that
the polyisocyanurate is contacted with water in the presence of an organic amine base to yield
one or more carboxylic acid(s) comprising equal to or more than 2 carboxylic acid groups per molecule and corresponding to the carboxylic acid(s) used to prepare the polyesterpolyol(s) that was/were used to prepare the polyisocyanurate,
and
one or more polyol(s) corresponding to the polyol(s) used to prepare the polyesterpolyol(s) that was/were used to prepare the polyisocyanurate,
and
one or more organic amine and/or polyamine, which correspond(s) to the organic isocyanate or polyisocyanate used to prepare the polyisocyanurate,
and that
the reaction mixture comprising the polyisocyanurate, water and the organic amine base is a stirred homogeneous or heterogeneous mixture, preferably a solution or an emulsion or a dispersion or combinations thereof, during hydrolysis.

2. A method according to claim 1,
**characterized in that** the polyisocyanurate is contacted with water in the presence of an organic amine base and a phase transfer catalyst, preferably a phase transfer catalyst selected from the group consisting of quaternary ammonium salts containing an ammonium cation containing 6 to 30 carbon atoms and organic sulfonates containing at least 7 carbon atoms.

3. The method of claim 1 or 2,
**characterized in that** the organic amine base is selected from the group consisting of an aliphatic amine, aromatic amine, heteroaromatic amine and mixtures thereof, preferably the organic amine base is an aliphatic amine comprising one or more tertiary nitrogen atom(s) and/or having a boiling point below that of at least one, preferably more than one, more preferred all organic amines obtained as product of the polyisocyanurate hydrolysis.

4. The method of any one of claims 1 to 3,
**characterized in that** the organic amine base is selected from the group consisting of
- a base according to Formula (1)
(((R³)₂N-R²)-(O-R¹)ₓ)_{y}-N(R⁴)_{z} (1)
wherein
the R¹ groups in the molecule may be identical or different, the R² groups in the molecule may be identical or different, the R³ groups in the molecule may be identical or different, and the R⁴ groups in the molecule may be identical or different and wherein
R¹ are identical or different and are independently from each other selected from the group consisting of linear or branched alkylene radicals with 1 to 10, preferably 2 to 6, more preferred 2 to 4 carbon atoms, most preferred ethylene, propylene or isopropylene
R² are identical or different and are independently from each other selected from the group consisting of linear or branched alkylene or hydroxy alkylene radicals with 1 to 20, preferably 1 to 18, more preferred 2 to 6, even more preferred 2 to 4 carbon atoms and if R² is hydroxy alkylene R² comprises 1 to 5, preferably 1, 2 or 3, more preferred 1 or 2 and most preferred 1 hydroxy group(s), most preferred ethylene, propylene, butylene, hexamethylene, 2-hydroxypropylene or isopropylene
R³ are identical or different and are independently from each other selected from the group consisting of hydrogen, linear or branched alkyl groups with 1 to 6, preferably 1 to 4, more preferred 1, 2 or 3 carbon atoms, linear or branched hydroxy alkyl groups with 1 to 6, preferably 1 to 4, more preferred 1, 2 or 3 carbon atoms, (CH₂CH₂O)ᵤH, (CH₂CH₂CH₂O)ᵥH and (CH₂CH(CH₃)CH₂O)_{w}H, most preferred hydrogen, methyl, ethyl, propyl, isopropyl, hydroxymethyl, 2-hydroxyethyl, 3-hydroxypropyl, 2-hydroxypropyl, 2-hydroxyisopropyl,
R⁴ are identical or different and are independently from each other selected from the group consisting of hydrogen, linear or branched, cyclic or alicyclic alkyl groups with 1 to 20, preferably 1 to 18, more preferred 1 to 6, even more preferred 1 to 4, most preferred 1, 2 or 3 carbon atoms, linear or branched hydroxy alkyl groups with 1 to 6, preferably 1 to 4, more preferred 1, 2 or 3 carbon atoms and cycloalkyl residues having 6 to 18 carbon atoms, preferably 6 to 12, more preferred 6 to 10 and even more preferred 6 or 7 carbon atoms, (CH₂CH₂O)ᵤH, (CH₂CH₂CH₂O)ᵥH and (CH₂CH(CH₃)CH₂O)_{w}H, most preferred methyl, ethyl, propyl, butyl, pentyl, hexyl, heptyl, octyl, cyclohexyl, isopropyl, tertbutyl, cyclohexyl, methylcyclohexyl, 2-cyclohexyl-ethyl, hydroxymethyl, 2-hydroxyethyl, 3-hydroxypropyl, 2-hydroxypropyl, 6-hydroxyhexyl and 2-hydroxyisopropyl, and wherein
u = 1 to 14, preferably 1 to 6
v = 1 to 14, preferably 1 to 6
w = 1 to 14, preferably 1 to 6
x = 0 or 1
y = 0 to 3
z = 0 to 3, with the proviso that if z = 3, one, preferably two, more preferred all three R⁴ are not hydrogen,
y + z = 3
- a base according to formula (2)
(((R⁶)₂N-R⁵)ₐ(H)_{b}N)_{d}-CZ-(N(R⁷)₂)_{c} (2)
wherein
the R⁵ groups in the molecule may be identical or different, the residues R⁶ groups in the molecule may be identical or different and the residues R⁷ groups in the molecule may be identical or different and wherein
R⁵ are identical or different and are independently from each other selected from the group consisting of linear or branched alkylene radicals with 1 to 10, preferably 2 to 6, more preferred 2 to 4 carbon atoms, wherein one or more CH₂ groups may be replaced by O to form ether bonds, preferably R⁵ is ethylene, propylene or isopropylene
R⁶ are identical or different and are independently from each other selected from the group consisting of hydrogen, linear or branched alkyl groups with 1 to 6, preferably 1 to 4, more preferred 1, 2 or 3 carbon atoms, linear or branched hydroxy alkyl groups with 1 to 6, preferably 1 to 4, more preferred 1, 2 or 3 carbon atoms, (CH₂CH₂O)ᵤH, (CH₂CH₂CH₂O)ᵥH and (CH₂CH(CH₃)CH₂O)_{w}H, most preferred hydrogen, methyl, ethyl, propyl, isopropyl, hydroxymethyl, 2-hydroxyethyl, 3-hydroxypropyl, 2-hydroxypropyl, 2-hydroxyisopropyl,
R⁷ are identical or different and are independently from each other selected from the group consisting of hydrogen, linear or branched alkyl groups with 1 to 6, preferably 1 to 4, more preferred 1, 2 or 3 carbon atoms, linear or branched hydroxy alkyl groups with 1 to 6, preferably 1 to 4, more preferred 1, 2 or 3 carbon atoms, (CH₂CH₂O)ᵤH, (CH₂CH₂CH₂O)ᵥH and (CH₂CH(CH₃)CH₂O)_{w}H, most preferred hydrogen, methyl, ethyl, propyl, isopropyl, and wherein
Z = O or NH,
u = 1 to 14, preferably 1 to 6
v = 1 to 14, preferably 1 to 6
w = 1 to 14, preferably 1 to 6
a = 0, 1 or 2
b = 0, 1 or 2
a + b = 2
c = 0, 1 or 2
d = 0, 1 or 2
c + d = 2
- a cyclic or bicyclic, aromatic or non-aromatic, nitrogen comprising organic base comprising 4 to 20 carbon atoms, preferably 5 to 14, more preferred 5 to 12 and most preferred 6 to 10 carbon atoms and 1 to 4 nitrogen atoms, preferably 1 to 3 more preferred 1, 2 or 3 nitrogen atoms, optionally the cyclic or bicyclic, aromatic or non-aromatic, nitrogen comprising organic base comprises one or more O atoms and/or carries one or more substituents, such as linear or branched alkyl or alkenyl groups with 1 to 6, preferably 1 to 4, more preferred 1, 2 or 3 carbon atoms, linear or branched hydroxy alkyl groups with 1 to 6, preferably 1 to 4, more preferred 1, 2 or 3 carbon atoms, (CH₂CH₂O)ᵤH, (CH₂CH₂CH₂O)ᵥH and (CH₂CH(CH₃)CH₂O)_{w}H, most preferred hydrogen, methyl, ethyl, propyl, isopropyl, hydroxymethyl, 2-hydroxyethyl, 3-hydroxypropyl, 2-hydroxypropyl, 2-hydroxyisopropyl or one or more N and or O comprising functional groups and/or two or more cyclic or bicyclic non-aromatic, nitrogen comprising organic rings are bond to each other via alkylene or ether alkylene linkages with 1 to 12, preferably 1 to 6 carbon atoms,
- and mixtures thereof.

5. The method according to claim 4,
**characterized in that** the organic amine base is selected from the group consisting of
- a trialkylamine according to Formula (3)
NR⁴R^{4'}R^{4"} (3)
with R⁴, R⁴', R⁴" are identical or different and are independently selected from the group consisting of hydrogen, linear or branched, cyclic or alicyclic alkyl groups with 1 20, preferably 1 to 18, more preferred 1 to 6, even more preferred 1 to 4, most preferred 1, 2 or 3 carbon atoms, linear or branched hydroxy alkyl groups with 1 to 6, preferably 1 to 4, more preferred 1, 2 or 3 carbon atoms and cycloalkyl residues having 6 to 18 carbon atoms, preferably 6 to 12, more preferred 6 to 10 and even more preferred 6 or 7 carbon atoms, (CH₂CH₂O)ᵤH, (CH₂CH₂CH₂O)ᵥH and (CH₂CH(CH₃)CH₂O)_{w}H, most preferred methyl, ethyl, propyl, butyl, pentyl, hexyl, heptyl, octyl, cyclohexyl, isopropyl, tertbutyl, cyclohexyl, methylcyclohexyl, 2-cyclohexyl-ethyl, hydroxymethyl, 2-hydroxyethyl, 3-hydroxypropyl, 2-hydroxypropyl, 6-hydroxyhexyl and 2-hydroxyisopropyl,
u = 1 to 14, preferably 1 to 6
v = 1 to 14, preferably 1 to 6
w = 1 to 14, preferably 1 to 6
with the provision one, preferably two, more preferred all three of R⁴, R⁴' and R⁴" are not hydrogen.
- a polyamine according to Formula (4)
((R³)₂N-R²)₃N (4),
wherein
R² are identical or different and are independently from each other selected from the group consisting of linear or branched alkylene or hydroxy alkylene radicals with 1 to 20, preferred 1 to 18, more preferred 2 to 6, even more preferred 2 to 4 carbon atoms and if R² is hydroxy alkyl R² comprises 1 to 5, preferably 1, 2 or 3, more preferred 1 or 2 and most preferred 1 hydroxy group(s), most preferred ethylene, propylene, butylene, hexamethylene, 2-hydroxypropylene or isopropylene
R³ are identical or different and are independently from each other selected from the group consisting of hydrogen, linear or branched alkyl groups with 1 to 6, preferably 1 to 4, more preferred 1, 2 or 3 carbon atoms, linear or branched hydroxy alkyl groups with 1 to 6, preferably 1 to 4, more preferred 1, 2 or 3 carbon atoms, (CH₂CH₂O)ᵤH, (CH₂CH₂CH₂O)ᵥH and (CH₂CH(CH₃)CH₂O)_{w}H, most preferred hydrogen, methyl, ethyl, propyl, isopropyl, hydroxymethyl, 2-hydroxyethyl, 3-hydroxypropyl, 2-hydroxypropyl, 2-hydroxyisopropyl,
u = 1 to 14, preferably 1 to 6
v = 1 to 14, preferably 1 to 6
w = 1 to 14, preferably 1 to 6
- a polyamine according to Formula (5)
(((R³)₂N-R²)-(O-R¹)ₓ)_{y}-N(R⁴)_{z} (5)
wherein x = 0 or 1, y = 1 or 2 and z = 1 or 2 and y + z = 3 and wherein
R¹ are identical or different and are independently from each other selected from the group consisting of linear or branched alkylene radicals with 1 to 10, preferably 2 to 6, more preferred 2 to 4 carbon atoms, most preferred ethylene, propylene or isopropylene,
R² are identical or different and are independently from each other selected from the group consisting of linear or branched alkylene or hydroxy alkylene radicals with 1 to 20, preferably 1 to 18, more preferred 2 to 6, more preferred 2 to 4 carbon atoms and if R² is hydroxy alkyl R² comprises 1 to 5, preferably 1, 2 or 3, more preferred 1 or 2 and most preferred 1 hydroxy group(s), most preferred ethylene, propylene, butylene, hexamethylene, 2-hydroxypropylene or isopropylene,
R³ are identical or different and are independently from each other selected from the group consisting of hydrogen, linear or branched alkyl groups with 1 to 6, preferably 1 to 4, more preferred 1, 2 or 3 carbon atoms, linear or branched hydroxy alkyl groups with 1 to 6, preferably 1 to 4, more preferred 1, 2 or 3 carbon atoms, (CH₂CH₂O)ᵤH, (CH₂CH₂CH₂O)ᵥH and (CH₂CH(CH₃)CH₂O)_{w}H, most preferred hydrogen, methyl, ethyl, propyl, isopropyl,
R⁴ are identical or different and are independently from each other selected from the group consisting of hydrogen, linear or branched, cyclic or alicyclic alkyl groups with 1 to 6, preferably 1 to 4, more preferred 1, 2 or 3 carbon atoms, linear or branched hydroxy alkyl groups with 1 to 6, preferably 1 to 4, more preferred 1, 2 or 3 carbon atoms, CH₂CH₂O)ᵤH, (CH₂CH₂CH₂O)ᵥH and (CH₂CH(CH₃)CH₂O)_{w}H, most preferred methyl, ethyl, propyl, butyl, pentyl, hexyl, heptyl, octyl, cyclohexyl isopropyl, tertbutyl, cyclohexyl, methylcyclohexyl, 2-cyclohexyl-ethyl, hydroxymethyl, 2-hydroxyethyl, 3-hydroxypropyl, 2-hydroxypropyl, 6-hydroxyhexyl and 2-hydroxyisopropyl
u = 1 to 14, preferably 1 to 6
v = 1 to 14, preferably 1 to 6
w = 1 to 14, preferably 1 to 6
- a polyaminoalkylurea according to Formula (6)
(((R⁶)₂N-R⁵)ₐ(H)_{b}N)_{d}-CO-(N(R⁷)₂)_{c} (6)
wherein
R⁵ are identical or different and are independently from each other selected from the group consisting of linear or branched alkylene radicals with 1 to 10, preferably 2 to 6, more preferred 2 to 4 carbon atoms, wherein one or more CH₂ groups may be replaced by O to form ether bonds, preferably R⁵ is ethylene, propylene or isopropylene
R⁶ are identical or different and are independently from each other selected from the group consisting of hydrogen, linear or branched alkyl groups with 1 to 6, preferably 1 to 4, more preferred 1, 2 or 3 carbon atoms, linear or branched hydroxy alkyl groups with 1 to 6, preferably 1 to 4, more preferred 1, 2 or 3 carbon atoms, (CH₂CH₂O)ᵤH, (CH₂CH₂CH₂O)ᵥH and (CH₂CH(CH₃)CH₂O)_{w}H, most preferred methyl, ethyl, propyl, isopropyl, hydroxymethyl, 2-hydroxyethyl, 3-hydroxypropyl, 2-hydroxypropyl, 2-hydroxy isopropyl,
R⁷ are identical or different and are independently from each other selected from the group consisting of hydrogen, linear or branched alkyl groups with 1 to 6, preferably 1 to 4, more preferred 1, 2 or 3 carbon atoms, linear or branched hydroxy alkyl groups with 1 to 6, preferably 1 to 4, more preferred 1, 2 or 3 carbon atoms, (CH₂CH₂O)ᵤH, (CH₂CH₂CH₂O)ᵥH and (CH₂CH(CH₃)CH₂O)_{w}H, most preferred hydrogen, methyl, ethyl, propyl, isopropyl, and wherein
u = 1 to 14, preferably 1 to 6
v = 1 to 14, preferably 1 to 6
w = 1 to 14, preferably 1 to 6
a = 0, 1 or 2
b = 0, 1 or 2
a + b = 2
c = 0, 1 or 2
d = 0, 1 or 2
c + d = 2,
- an organic base comprising a guanidino group according to Formula (7)
(((R₆)₂N-R₅)ₐ(H)_{b}N)_{d}-C(NH)-(N(R₇)₂)_{c} (7)
wherein
R⁵ are identical or different and are independently from each other selected from the group consisting of linear or branched alkylene radicals with 1 to 10, preferably 2 to 6, more preferred 2 to 4 carbon atoms, wherein one or more CH₂ groups may be replaced by O to form ether bonds, preferably R⁵ is ethylene, propylene or isopropylene
R⁶ are identical or different and are independently from each other selected from the group consisting of hydrogen, linear or branched alkyl groups with 1 to 6, preferably 1 to 4, more preferred 1, 2 or 3 carbon atoms, linear or branched hydroxy alkyl groups with 1 to 6, preferably 1 to 4, more preferred 1, 2 or 3 carbon atoms, (CH₂CH₂O)ᵤH, (CH₂CH₂CH₂O)ᵥH and (CH₂CH(CH₃)CH₂O)_{w}H, most preferred methyl, ethyl, propyl, isopropyl, hydroxymethyl, 2-hydroxyethyl, 3-hydroxypropyl, 2-hydroxypropyl, 2-hydroxyisopropyl,
R⁷ are identical or different and are independently from each other selected from the group consisting of hydrogen, linear or branched alkyl groups with 1 to 6, preferably 1 to 4, more preferred 1, 2 or 3 carbon atoms, linear or branched hydroxy alkyl groups with 1 to 6, preferably 1 to 4, more preferred 1, 2 or 3 carbon atoms, (CH₂CH₂O)ᵤH, (CH₂CH₂CH₂O)ᵥH and (CH₂CH(CH₃)CH₂O)_{w}H, most preferred methyl, ethyl, propyl, isopropyl, and wherein
u = 1 to 14, preferably 1 to 6
v = 1 to 14, preferably 1 to 6
w = 1 to 14, preferably 1 to 6
a = 0, 1 or 2
b = 0, 1 or 2
a + b = 2
c = 0, 1 or 2, preferably 0 or 1, more preferred 0
d = 0, 1 or 2, preferably 1 or 2, more preferred 2
c + d = 2,
- and mixtures thereof.

6. The method of any one of claim 2 to 5,
**characterized in that** the phase transfer catalyst is a quaternary ammonium salt having the general structure R1 R2 R3 R4 NX wherein R1,R2,R3, and R4 are the same or different and are hydrocarbyl groups selected from alkyl, aryl, and arylalkyl and X is selected from the group consisting of halide, preferably chloride and/or bromide, hydrogen sulfate, alkyl sulfate, preferably methylsulfate and ethylsulfate, carbonate, hydrogen carbonate, carboxylate, preferably acetate, or hydroxide.

7. The method of claim 6,
**characterized in that**
- R₁ and R₂ are the same or different and are alkyl groups with 1 to 12, preferably 1 to 10, more preferred 1 to 7, even more preferred 1 to 6, especially preferred 1 to 5 and most preferred 1 to 4 carbon atoms, wherein the alkyl groups may be linear, branched, cyclic, saturated or unsaturated, most preferred are linear, saturated alkyl groups,
- R₃ is selected from the group consisting of alkyl groups with 1 to 12, preferably 1 to 10, more preferred 1 to 7, even more preferred 1 to 6, especially preferred 1 to 5 and most preferred 1 to 4 carbon atoms, aryl groups with 6 to 14, preferably 6 to 12, and most preferred 6 to 10 carbon atoms, and aralkyl groups with 7 to 14, preferably 7 to 12, and most preferred 7 to 10 carbon atoms, wherein the alkyl groups may be linear, branched, cyclic, saturated or unsaturated, most preferred linear and,
- R₄ is selected from the group consisting of alkyl groups with 3 to 12, preferably 3 to 10, more preferred 3 to 7, most preferred 4 to 6 carbon atoms, aryl groups with 6 to 14, preferably 6 to 12, and most preferred 6 to 10 carbon atoms, and aralkyl groups with 7 to 14, preferably 7 to 12, and most preferred 7 to 10 carbon atoms, wherein the alkyl groups may be linear, branched, cyclic, saturated or unsaturated, most preferred linear and saturated, and
- X is selected from the group consisting of halide, preferably chloride and/or bromide, hydrogen sulfate, alkyl sulfate, preferably methylsulfate and ethylsulfate, carbonate, hydrogen carbonate, acetate or hydroxide,
preferably
R₁ to R₄ are selected such that the sum of carbon atoms in the quaternary ammonium cation is 6 to 14, preferably 7 to 14, more preferred 8 to 13
or
R₁ to R₄ are selected such that the sum of carbon atoms in the quaternary ammonium cation is 15 to 30, preferably 15 to 28, more preferred 15 to 24, even more preferred 16 to 22 and most preferred 16 to 20.

8. The method of any one of claims 1 to 7,
**characterized in that** the polyisocyanurate is produced by reacting
a) A polyesterpolyol or a mixture of polyesterpolyols or a mixture of a polyester- and a polyetherpolyol, comprising isocyanate-reactive groups selected from OH groups, SH groups, NH groups, NH₂ groups and mixtures thereof, preferably OH groups, with
b) an excess of one or more isocyanate(s) selected from the group consisting of organic isocyanate, mixture of organic isocyanates, organic polyisocyanate, mixture of organic polyisocyanates and a mixture of organic isocyanate(s) and organic polyisocyanate(s), in the presence of
c) a catalyst catalyzing the reaction of the isocyanate reactive groups with the isocyanate groups and / or the reaction of isocyanate groups with each other, with the proviso that at least one trimerization catalyst is comprised
d) optionally a foam stabilizer
e) optionally a propellant
f) optionally further additives

9. The method of any one of claims 1 to 8,
**characterized in that**
the one or more carboxylic acid(s) obtained after the hydrolysis is selected from the group consisting of phthalic acid, preferably (ortho)-phthalic acid, isophthalic acid, terephthalic acid and isomeric naphthalene dicarboxylic acids, succinic acid, glutaric acid, adipic acid, suberic acid, azelaic acid, sebacic acid, decandicarboxylic acid, maleic acid, fumaric acid and mixtures thereof
and/or
the one or more polyol(s) obtained after the hydrolysis is a diol on the basis of glycol and/or glycol ether having a molecular weight below 180 g/mol, preferably below 140 g/mol, particular preferred monoethylene glycol and/or diethylene glycol,
and/or
the one or more organic amine and/or polyamine obtained after the hydrolysis is selected from the group consisting of dodecane 1,12-diamine, 2-ethyltetramethylene 1,4-diamine, 2-methylpentamethylene 1,5-diamine, tetramethylene 1,4-diamine, pentamethylene diamine (PDA) and preferably hexamethylene 1,6-diamine (HMDA), cycloaliphatic diamines such as cyclohexane 1,3- and 1,4-diamine and also any mixtures of these isomers, 4,4'-Methylenedicyclohexyldiisocyanate (H12MDI), 1-isocyanato-3,3,5-trimethyl-5-isocyanatomethylcyclohexane (isophorone diamine or IPDA for short), hexahydrotolylene 2,4- and 2,6-diamine and also the corresponding isomer mixtures, and preferably aromatic diamines and polyisocyanates, for example toluene 2,4- and 2,6-diamin (TDA) and the corresponding isomer mixtures, naphthalene diamine, diethyltoluene diamine, mixtures of diphenylmethane 4, 4', 2,4'- and 2,2'-diamins (MDA) and polyphenylpolymethylene polyamines and and their higher condensed analogues with an average functionality of 2 to 4.

10. The method of any one of claims 1 to 9,
**characterized in that**
the reaction products of the hydrolysis are separated from each other, and optionally purified, preferred separation and purification methods are selected from the group consisting of filtration, membrane separation, phase separation, chromatographic methods, distillation, extraction and combinations of said methods.

11. The method of any one of claims 1 to 10,
**characterized in that** the polyisocyanurate is foamed, preferably a rigid foam.

12. The method of any one of claims 1 to 11,
**characterized in that** the polyisocyanurate is contacted with water and the organic amine base or with water, the organic amine and the phase transfer catalyst,
at a temperature of from 80°C to 220°C, preferably 100°C to 200°C, more preferred 120°C to 190°C and most preferred 140°C to 180°C
and/or
for 1 minute to 48 hours, preferably 1 minute to 40 hours, more preferred 5 minutes to 35 hours, even more preferred 10 minutes to 30 hours, particular preferred 20 minutes to 24 hours, especially preferred 30 minutes to 18 hours and most preferred 30 minutes to 16 hours
and/or
at atmospheric pressure or under pressure of 1 to 30 bar, 2 - 20 bar, more preferred 3 to 15 bar.

13. The method of any one of claims 2 to 12,
**characterized in that** at least 0.5 weight percent catalyst, based on the weight of the polyisocyanurate is used, more preferably 0.5 to 15 weight percent, even more preferred 1 to 10 weight percent, particular preferred more 1 to 8 weight percent, especially preferred 1 to 7 and most preferred 2 to 6 weight percent.

14. The method of any one of claims 1 to 13,
**characterized in that** the weight ratio of the sum of the organic amine base to polyisocyanurate is in the range of from 1 : 100 to 50 : 1, preferably 1 : 50 to 25 : 1, more preferred 1 : 10 to 20 : 1, even more preferred 1 : 5 to 10 : 1, and most preferred 1 : 2 to 3 : 1.

15. Process for production of new chemicals, preferably polyurethanes, preferably polyurethane foams, or polyisocyanurates, preferably polyisocyanurate foams comprising the steps:
(1) hydrolyzing a polyisocyanurate in a method according to any one of claims 1 to 14;
(2) using of the one or more carboxylic acid(s) and/or polyol(s) and/or organic amine(s) and/or polyamine(s) obtained in step (1).

## Patentansprüche

1. Verfahren zum Hydrolysieren eines Polyisocyanurats, **dadurch gekennzeichnet, dass**
das Polyisocyanurat produziert wird durch Umsetzung eines oder mehrerer Polyol(e) ausgewählt aus der Gruppe bestehend aus Polyesterpolyol, Mischung von Polyesterpolyolen und Mischung von Polyester- und Polyetherpolyolen mit einem Überschuss eines oder mehrerer Isocyanat(e) ausgewählt aus der Gruppe bestehend aus organischem Isocyanat, Mischung von organischen Isocyanaten, organischer Polyisocyanatmischung aus organischen Polyisocyanaten und einer Mischung aus organischen Isocyanat(en) und organischen Polyisocyanat(en),
und dass
das Polyisocyanurat in Gegenwart einer organischen Aminbase mit Wasser kontaktiert wird, um folgendes zu ergeben:
eine oder mehrere Carbonsäure(n), umfassend gleich oder mehr als 2 Carbonsäuregruppen pro Molekül und entsprechend den zur Herstellung des/der Polyesterpolyol(e) verwendeten Carbonsäure(n), die zum Herstellen des Polyisocyanurats verwendet wurde(n), und
ein oder mehrere Polyol(e) entsprechend dem/den zur Herstellung des/der Polyesterpolyole verwendeten Polyol(en), das/die zur Herstellung des Polyisocyanurats verwendet wurde(n), und
ein oder mehrere organische Amin(e) und/oder Polyamin(e) entsprechend dem zur Herstellung des Polyisocyanurats verwendeten organischen Isocyanat oder Polyisocyanat, und dass
die Reaktionsmischung, umfassend das Polyisocyanurat, Wasser und die organische Aminbase, während der Hydrolyse eine gerührte homogene oder heterogene Mischung ist, bevorzugt eine Lösung oder eine Emulsion oder eine Dispersion oder Kombinationen davon.

2. Verfahren nach Anspruch 1,
**dadurch gekennzeichnet, dass** das Polyisocyanurat in Gegenwart einer organischen Aminbase und eines Phasentransferkatalysators, bevorzugt eines Phasentransferkatalysators ausgewählt aus der Gruppe bestehend aus quartären Ammoniumsalzen, die ein Ammoniumkation, das 6 bis 30 Kohlenstoffatome enthält, und organische Sulfonate enthalten, die mindestens 7 Kohlenstoffatomen enthalten, mit Wasser kontaktiert wird.

3. Verfahren nach Anspruch 1 oder 2,
**dadurch gekennzeichnet, dass** die organische Aminbase ausgewählt ist aus der Gruppe bestehend aus einem aliphatischen Amin, aromatischen Amin, heteroaromatischen Amin und Mischungen davon, wobei die organische Aminbase bevorzugt ein aliphatisches Amin ist, umfassend ein oder mehrere tertiäre Stickstoffatom(e), und/oder das einen Siedepunkt unterhalb des Siedepunkts von mindestens einem, bevorzugt mehr als einem, bevorzugter allen als Produkt der Polyisocyanurathydrolyse erhaltenen organischen Aminen aufweist.

4. Verfahren nach einem der Ansprüche 1 bis 3, **dadurch gekennzeichnet, dass** die organische Aminbase ausgewählt ist aus der Gruppe bestehend aus
- einer Base gemäß Formel (1)
(((R³)₂N-R²)-(O-R¹)ₓ)_{y}-N(R⁴)_{z} (1)
wobei
die R¹-Gruppen in dem Molekül gleich oder verschieden sein können, die R²-Gruppen in dem Molekül gleich oder verschieden sein können, die R³-Gruppen in dem Molekül gleich oder verschieden sein können, und die R⁴-Gruppen in dem Molekül gleich oder verschieden sein können, und wobei
R¹ gleich oder verschieden sind und unabhängig voneinander ausgewählt sind aus der Gruppe bestehend aus linearen oder verzweigten Alkylenresten mit 1 bis 10, bevorzugt 2 bis 6, bevorzugter 2 bis 4 Kohlenstoffatomen, am meisten bevorzugt Ethylen, Propylen oder Isopropylen R² gleich oder verschieden sind und unabhängig voneinander ausgewählt sind aus der Gruppe bestehend aus linearen oder verzweigten Alkylen- oder Hydroxyalkylenresten mit 1 bis 20, bevorzugt 1 bis 18, bevorzugter 2 bis 6, noch weiter bevorzugt 2 bis 4 Kohlenstoffatomen, und, falls R² Hydroxyalkylen ist, R² 1 bis 5, bevorzugt 1, 2 oder 3, bevorzugter 1 oder 2 und am meisten bevorzugt 1 Hydroxygruppe(en) umfasst, am meisten bevorzugt Ethylen, Propylen, Butylen, Hexamethylen, 2-Hydroxypropylen oder Isopropylen R³ gleich oder verschieden sind und unabhängig voneinander ausgewählt sind aus der Gruppe bestehend aus Wasserstoff, linearen oder verzweigten Alkylgruppen mit 1 bis 6, bevorzugt 1 bis 4, bevorzugter 1, 2 oder 3 Kohlenstoffatomen, linearen oder verzweigten Hydroxyalkylgruppen mit 1 bis 6, bevorzugt 1 bis 4, bevorzugter 1, 2 oder 3 Kohlenstoffatomen, (CH₂CH₂O)ᵤH, (CH₂CH₂CH₂O)ᵥH und (CH₂CH(CH₃)CH₂O)_{w}H, am meisten bevorzugt Wasserstoff, Methyl, Ethyl, Propyl, Isopropyl, Hydroxymethyl, 2-Hydroxyethyl, 3-Hydroxypropyl, 2-Hydroxypropyl, 2-Hydroxyisopropyl
R⁴ gleich oder verschieden sind und unabhängig voneinander ausgewählt sind aus der Gruppe bestehend aus Wasserstoff, linearen oder verzweigten, cyclischen oder alicyclischen Alkylgruppen mit 1 bis 20, bevorzugt 1 bis 18, bevorzugter 1 bis 6, noch weiter bevorzugt 1 bis 4, am meisten bevorzugt 1, 2 oder 3 Kohlenstoffatomen, linearen oder verzweigten Hydroxyalkylgruppen mit 1 bis 6, bevorzugt 1 bis 4, bevorzugter 1, 2 oder 3 Kohlenstoffatomen und Cycloalkylresten mit 6 bis 18 Kohlenstoffatomen, bevorzugt 6 bis 12, bevorzugter 6 bis 10 und noch weiter bevorzugt 6 bis 7 Kohlenstoffatomen, (CH₂CH₂O)ᵤH, (CH₂CH₂CH₂O)ᵥH und (CH₂CH(CH₃)CH₂O)_{w}H, am meisten bevorzugt Methyl, Ethyl, Propyl, Butyl, Pentyl, Hexyl, Heptyl, Octyl, Cyclohexyl, Isopropyl, tert-Butyl, Cyclohexyl, Methylcyclohexyl, 2-Cyclohexylethyl, Hydroxymethyl, 2-Hydroxyethyl, 3-Hydroxypropyl, 2-Hydroxypropyl, 6-Hydroxyhexyl und 2-Hydroxyisopropyl, und wobei
u = 1 bis 14, bevorzugt 1 bis 6 ist
v = 1 bis 14, bevorzugt 1 bis 6 ist
w = 1 bis 14, bevorzugt 1 bis 6 ist
x = 0 oder 1 ist
y = 0 bis 3 ist
z = 0 bis 3 ist, mit der Maßgabe, dass, wenn z = 3, ein, bevorzugt zwei, bevorzugter alle drei R⁴ nicht Wasserstoff sind,
y + z = 3 ist
- einer Base gemäß Formel (2)
(((R⁶)₂N-R⁵)ₐ(H)_{b}N)_{d}-CZ-(N(R⁷)₂)_{c} (2)
wobei
die R⁵-Gruppen in dem Molekül gleich oder verschieden sein können, die R⁶-Restgruppen in dem Molekül gleich oder verschieden sein können, und die R⁷-Restgruppen in dem Molekül gleich oder verschieden sein können, und wobei
R⁵ gleich oder verschieden sind und unabhängig voneinander ausgewählt aus der Gruppe bestehend aus linearen oder verzweigten Alkylenresten mit 1 bis 10, bevorzugt 2 bis 6, bevorzugter 2 bis 4 Kohlenstoffatomen, wobei eine oder mehrere CH₂-Gruppen durch O zur Bildung von Etherbindungen ersetzt sein können, wobei R⁵ bevorzugt Ethylen, Propylen oder Isopropylen ist R⁶ gleich oder verschieden sind und unabhängig voneinander ausgewählt sind aus der Gruppe bestehend aus Wasserstoff, linearen oder verzweigten Alkylgruppen mit 1 bis 6, bevorzugt 1 bis 4, bevorzugter 1, 2 oder 3 Kohlenstoffatomen, linearen oder verzweigten Hydroxyalkylgruppen mit 1 bis 6, bevorzugt 1 bis 4, bevorzugter 1, 2 oder 3 Kohlenstoffatomen, (CH₂CH₂O)ᵤH, (CH₂CH₂CH₂O)ᵥH und (CH₂CH(CH₃)CH₂O)_{w}H, am meisten bevorzugt Wasserstoff, Methyl, Ethyl, Propyl, Isopropyl, Hydroxymethyl, 2-Hydroxyethyl, 3-Hydroxypropyl, 2-Hydroxypropyl, 2-Hydroxyisopropyl
R⁷ gleich oder verschieden sind und unabhängig voneinander ausgewählt sind aus der Gruppe bestehend aus Wasserstoff, linearen oder verzweigten Alkylgruppen mit 1 bis 6, bevorzugt 1 bis 4, bevorzugter 1, 2 oder 3 Kohlenstoffatomen, linearen oder verzweigten Hydroxyalkylgruppen mit 1 bis 6, bevorzugt 1 bis 4, bevorzugter 1, 2 oder 3 Kohlenstoffatomen, (CH₂CH₂O)ᵤH, (CH₂CH₂CH₂O)ᵥH und (CH₂CH(CH₃)CH₂O)_{w}H, am meisten bevorzugt Wasserstoff, Methyl, Ethyl, Propyl, Isopropyl, und wobei Z = O oder NH ist,
u = 1 bis 14, bevorzugt 1 bis 6 ist
v = 1 bis 14, bevorzugt 1 bis 6 ist
w = 1 bis 14, bevorzugt 1 bis 6 ist
a = 0, 1 oder 2 ist
b = 0, 1 oder 2 ist
a + b = 2 ist
c = 0, 1 oder 2 ist
d = 0, 1 oder 2 ist
c + d = 2 ist
- einer cyclischen oder bicyclischen, aromatischen oder nichtaromatischen Stickstoff umfassenden organischen Base, umfassend 4 bis 20 Kohlenstoffatome, bevorzugt 5 bis 14, bevorzugter 5 bis 12 und am meisten bevorzugt 6 bis 10 Kohlenstoffatome und 1 bis 4 Stickstoffatome, bevorzugt 1 bis 3, bevorzugter 1, 2 oder 3 Stickstoffatome, wobei die cyclische oder bicyclische, aromatische oder nichtaromatische Stickstoff umfassende organische Base gegebenenfalls ein oder mehrere O-Atome umfasst und/oder einen oder mehrere Substituenten trägt, wie lineare oder verzweigte Alkyl- oder Alkenylgruppen mit 1 bis 6, bevorzugt 1 bis 4, bevorzugter 1, 2 oder 3 Kohlenstoffatomen, lineare oder verzweigte Hydroxyalkylgruppen mit 1 bis 6, bevorzugt 1 bis 4, bevorzugter 1, 2 oder 3 Kohlenstoffatomen, (CH₂CH₂O)ᵤH, (CH₂CH₂CH₂O)ᵥH und (CH₂CH(CH₃)CH₂O)_{w}H, am meisten bevorzugt Wasserstoff, Methyl, Ethyl, Propyl, Isopropyl, Hydroxymethyl, 2-Hydroxyethyl, 3-Hydroxypropyl, 2-Hydroxypropyl, 2-Hydroxyisopropyl oder ein oder mehrere N und/oder O umfassende funktionelle Gruppen und/oder zwei oder mehrere cyclische oder bicyclische nichtaromatische, Stickstoff umfassende organische Ringe, die über Alkylen- oder Etheralkylenbindungen mit 1 bis 12, bevorzugt 1 bis 6 Kohlenstoffatomen aneinander gebunden sind,
- und Mischungen davon.

5. Verfahren nach Anspruch 4,
**dadurch gekennzeichnet, dass** die organische Aminbase ausgewählt ist aus der Gruppe bestehend aus
- einem Trialkylamin gemäß Formel (3)
NR⁴R^{4'}R^{4"} (3)
wobei R⁴, R^{4'}, R^{4"} gleich oder verschieden sind und unabhängig ausgewählt sind aus der Gruppe bestehend aus Wasserstoff, linearen oder verzweigten, cyclischen oder alicyclischen Alkylgruppen mit 1 bis 20, bevorzugt 1 bis 18, bevorzugter 1 bis 6, noch weiter bevorzugt 1 bis 4, am meisten bevorzugt 1, 2 oder 3 Kohlenstoffatomen, linearen oder verzweigten Hydroxyalkylgruppen mit 1 bis 6, bevorzugt 1 bis 4, bevorzugter 1, 2 oder 3 Kohlenstoffatomen und Cycloalkylresten mit 6 bis 18 Kohlenstoffatomen, bevorzugt 6 bis 12, bevorzugter 6 bis 10 und noch weiter bevorzugt 6 bis 7 Kohlenstoffatomen, (CH₂CH₂O)ᵤH, (CH₂CH₂CH₂O)ᵥH und (CH₂CH(CH₃)CH₂O)_{w}H, am meisten bevorzugt Methyl, Ethyl, Propyl, Butyl, Pentyl, Hexyl, Heptyl, Octyl, Cyclohexyl, Isopropyl, tert-Butyl, Cyclohexyl, Methylcyclohexyl, 2-Cyclohexylethyl, Hydroxymethyl, 2-Hydroxyethyl, 3-Hydroxypropyl, 2-Hydroxypropyl, 6-Hydroxyhexyl und 2-Hydroxyisopropyl,
u = 1 bis 14, bevorzugt 1 bis 6 ist
v = 1 bis 14, bevorzugt 1 bis 6 ist
w = 1 bis 14, bevorzugt 1 bis 6 ist
mit der Maßgabe, dass eine, bevorzugt zwei, bevorzugter alle drei von R⁴, R^{4'} und R^{4''} nicht Wasserstoff sind,
- einem Polyamin gemäß Formel (4)
((R³)₂N-R²)₃N (4),
wobei
R² gleich oder verschieden sind und unabhängig voneinander ausgewählt sind aus der Gruppe bestehend aus linearen oder verzweigten Alkylen- oder Hydroxyalkylenresten mit 1 bis 20, bevorzugt 1 bis 18, besonders bevorzugt 2 bis 6, noch weiter bevorzugt 2 bis 4 Kohlenstoffatomen, und, falls R² Hydroxyalkyl ist, R² 1 bis 5, bevorzugt 1, 2 oder 3, bevorzugter 1 oder 2 und am meisten bevorzugt 1 Hydroxygruppe(en) umfasst, am meisten bevorzugt Ethylen, Propylen, Butylen, Hexamethylen, 2-Hydroxypropylen oder Isopropylen R³ gleich oder verschieden sind und unabhängig voneinander ausgewählt sind aus der Gruppe bestehend aus Wasserstoff, linearen oder verzweigten Alkylgruppen mit 1 bis 6, bevorzugt 1 bis 4, bevorzugter 1, 2 oder 3 Kohlenstoffatomen, linearen oder verzweigten Hydroxyalkylgruppen mit 1 bis 6, bevorzugt 1 bis 4, bevorzugter 1, 2 oder 3 Kohlenstoffatomen, (CH₂CH₂O)ᵤH, (CH₂CH₂CH₂O)ᵥH und (CH₂CH(CH₃)CH₂O)_{w}H, am meisten bevorzugt Wasserstoff, Methyl, Ethyl, Propyl, Isopropyl, Hydroxymethyl, 2-Hydroxyethyl, 3-Hydroxypropyl, 2-Hydroxypropyl, 2-Hydroxyisopropyl
u = 1 bis 14, bevorzugt 1 bis 6 ist
v = 1 bis 14, bevorzugt 1 bis 6 ist
w = 1 bis 14, bevorzugt 1 bis 6 ist
- einem Polyamin gemäß Formel (5)
(((R³)₂N-R²)-(O-R¹)ₓ)_{y}-N(R⁴)_{z} (5)
wobei x = 0 oder 1 ist, y = 1 oder 2 ist, und z = 1 oder
2 ist, und y + z = 3 ist und wobei
R¹ gleich oder verschieden sind und unabhängig voneinander ausgewählt sind aus der Gruppe bestehend aus linearen oder verzweigten Alkylenresten mit 1 bis 10, bevorzugt 2 bis 6, bevorzugter 2 bis 4 Kohlenstoffatomen, am meisten bevorzugt Ethylen, Propylen oder Isopropylen,
R² gleich oder verschieden sind und unabhängig voneinander ausgewählt sind aus der Gruppe bestehend aus linearen oder verzweigten Alkylen- oder Hydroxyalkylenresten mit 1 bis 20, bevorzugt 1 bis 18, bevorzugter 2 bis 6, noch weiter bevorzugt 2 bis 4 Kohlenstoffatomen, und, falls R² Hydroxyalkyl ist, R² 1 bis 5, bevorzugt 1, 2 oder 3, bevorzugter 1 oder 2 und am meisten bevorzugt 1 Hydroxygruppe(en) umfasst, am meisten bevorzugt Ethylen, Propylen, Butylen, Hexamethylen, 2-Hydroxypropylen oder Isopropylen,
R³ gleich oder verschieden sind und unabhängig voneinander ausgewählt sind aus der Gruppe bestehend aus Wasserstoff, linearen oder verzweigten Alkylgruppen mit 1 bis 6, bevorzugt 1 bis 4, bevorzugter 1, 2 oder 3 Kohlenstoffatomen, linearen oder verzweigten Hydroxyalkylgruppen mit 1 bis 6, bevorzugt 1 bis 4, bevorzugter 1, 2 oder 3 Kohlenstoffatomen, (CH₂CH₂O)ᵤH, (CH₂CH₂CH₂O)ᵥH und (CH₂CH(CH₃)CH₂O)_{w}H, am meisten bevorzugt Wasserstoff, Methyl, Ethyl, Propyl, Isopropyl,
R⁴ gleich oder verschieden sind und unabhängig voneinander ausgewählt sind aus der Gruppe bestehend aus Wasserstoff, linearen oder verzweigten, cyclischen oder alicyclischen Alkylgruppen mit 1 bis 6, bevorzugt 1 bis 4, bevorzugter 1, 2 oder 3 Kohlenstoffatomen, linearen oder verzweigten Hydroxyalkylgruppen mit 1 bis 6, bevorzugt 1 bis 4, bevorzugter 1, 2 oder 3 Kohlenstoffatomen, (CH₂CH₂O)ᵤH, (CH₂CH₂CH₂O)ᵥH und (CH₂CH(CH₃)CH₂O)_{w}H, am meisten bevorzugt Methyl, Ethyl, Propyl, Butyl, Pentyl, Hexyl, Heptyl, Octyl, Cyclohexyl, Isopropyl, tert-Butyl, Cyclohexyl, Methylcyclohexyl, 2-Cyclohexylethyl, Hydroxymethyl, 2-Hydroxyethyl, 3-Hydroxypropyl, 2-Hydroxypropyl, 6-Hydroxyhexyl und 2-Hydroxyisopropyl
u = 1 bis 14, bevorzugt 1 bis 6 ist
v = 1 bis 14, bevorzugt 1 bis 6 ist
w = 1 bis 14, bevorzugt 1 bis 6 ist
- einem Polyaminoalkylharnstoff gemäß Formel (6)
(((R⁶)₂N-R⁵)ₐ(H)_{b}N)_{d}-CO-(N(R⁷)₂)_{c} (6)
wobei
R⁵ gleich oder verschieden sind und unabhängig voneinander ausgewählt aus der Gruppe bestehend aus linearen oder verzweigten Alkylenresten mit 1 bis 10, bevorzugt 2 bis 6, bevorzugter 2 bis 4 Kohlenstoffatomen, wobei eine oder mehrere CH₂-Gruppen durch O zur Bildung von Etherbindungen ersetzt sein können, wobei R⁵ bevorzugt Ethylen, Propylen oder Isopropylen ist R⁶ gleich oder verschieden sind und unabhängig voneinander ausgewählt sind aus der Gruppe bestehend aus Wasserstoff, linearen oder verzweigten Alkylgruppen mit 1 bis 6, bevorzugt 1 bis 4, bevorzugter 1, 2 oder 3 Kohlenstoffatomen, linearen oder verzweigten Hydroxyalkylgruppen mit 1 bis 6, bevorzugt 1 bis 4, bevorzugter 1, 2 oder 3 Kohlenstoffatomen, (CH₂CH₂O)ᵤH, (CH₂CH₂CH₂O)ᵥH und (CH₂CH(CH₃)CH₂O)_{w}H, am meisten bevorzugt Methyl, Ethyl, Propyl, Isopropyl, Hydroxymethyl, 2-Hydroxyethyl, 3-Hydroxypropyl, 2-Hydroxypropyl, 2-Hydroxyisopropyl,
R⁷ gleich oder verschieden sind und unabhängig voneinander ausgewählt sind aus der Gruppe bestehend aus Wasserstoff, linearen oder verzweigten Alkylgruppen mit 1 bis 6, bevorzugt 1 bis 4, bevorzugter 1, 2 oder 3 Kohlenstoffatomen, linearen oder verzweigten Hydroxyalkylgruppen mit 1 bis 6, bevorzugt 1 bis 4, bevorzugter 1, 2 oder 3 Kohlenstoffatomen, (CH₂CH₂O)ᵤH, (CH₂CH₂CH₂O)ᵥH und (CH₂CH(CH₃)CH₂O)_{w}H, am meisten bevorzugt Wasserstoff, Methyl, Ethyl, Propyl, Isopropyl, und wobei u = 1 bis 14, bevorzugt 1 bis 6 ist
v = 1 bis 14, bevorzugt 1 bis 6 ist
w = 1 bis 14, bevorzugt 1 bis 6 ist
a = 0, 1 oder 2 ist
b = 0, 1 oder 2 ist
a + b = 2 ist
c = 0, 1 oder 2 ist
d = 0, 1 oder 2 ist
c + d = 2 ist,
- einer organischen Base, umfassend eine Guanidinogruppe gemäß Formel (7)
(((R₆)₂N-R₅)ₐ(H)_{b}N)_{d}-C(NH)-(N(R₇)₂)_{c} (7)
wobei
R⁵ gleich oder verschieden sind und unabhängig voneinander ausgewählt aus der Gruppe bestehend aus linearen oder verzweigten Alkylenresten mit 1 bis 10, bevorzugt 2 bis 6, bevorzugter 2 bis 4 Kohlenstoffatomen, wobei eine oder mehrere CH₂-Gruppen durch O zur Bildung von Etherbindungen ersetzt sein können, wobei R⁵ bevorzugt Ethylen, Propylen oder Isopropylen ist R⁶ gleich oder verschieden sind und unabhängig voneinander ausgewählt sind aus der Gruppe bestehend aus Wasserstoff, linearen oder verzweigten Alkylgruppen mit 1 bis 6, bevorzugt 1 bis 4, bevorzugter 1, 2 oder 3 Kohlenstoffatomen, linearen oder verzweigten Hydroxyalkylgruppen mit 1 bis 6, bevorzugt 1 bis 4, bevorzugter 1, 2 oder 3 Kohlenstoffatomen, (CH₂CH₂O)ᵤH, (CH₂CH₂CH₂O)ᵥH und (CH₂CH(CH₃)CH₂O)_{w}H, am meisten bevorzugt Methyl, Ethyl, Propyl, Isopropyl, Hydroxymethyl, 2-Hydroxyethyl, 3-Hydroxypropyl, 2-Hydroxypropyl, 2-Hydroxyisopropyl
R⁷ gleich oder verschieden sind und unabhängig voneinander ausgewählt sind aus der Gruppe bestehend aus Wasserstoff, linearen oder verzweigten Alkylgruppen mit 1 bis 6, bevorzugt 1 bis 4, bevorzugter 1, 2 oder 3 Kohlenstoffatomen, linearen oder verzweigten Hydroxyalkylgruppen mit 1 bis 6, bevorzugt 1 bis 4, bevorzugter 1, 2 oder 3 Kohlenstoffatomen, (CH₂CH₂O)ᵤH, (CH₂CH₂CH₂O)ᵥH und (CH₂CH(CH₃)CH₂O)_{w}H, am meisten bevorzugt Wasserstoff, Methyl, Ethyl, Propyl, Isopropyl, und wobei u = 1 bis 14, bevorzugt 1 bis 6 ist
v = 1 bis 14, bevorzugt 1 bis 6 ist
w = 1 bis 14, bevorzugt 1 bis 6 ist
a = 0, 1 oder 2 ist
b = 0, 1 oder 2 ist
a + b = 2 ist
c = 0, 1 oder 2 ist, bevorzugt 0 oder 1, bevorzugter 0 ist
d = 0, 1 oder 2 ist, bevorzugt 1 oder 2, bevorzugter 2 ist
c + d = 2 ist,
- und Mischungen davon.

6. Verfahren nach einem der Ansprüche 2 bis 5, **dadurch gekennzeichnet, dass** der Phasentransferkatalysator ein quaternäres Ammoniumsalz mit der allgemeinen Struktur R1 R2 R3 R4 NX ist, wobei R1, R2, R3 und R4 gleich oder verschieden sind und Kohlenwasserstoffrestgruppen ausgewählt aus Alkyl, Aryl und Arylalkyl sind, und X ausgewählt ist aus der Gruppe bestehend aus Halogenid, bevorzugt Chlorid und/oder Bromid, Hydrogensulfat, Alkylsulfat, bevorzugt Methylsulfat und Ethylsulfat, Carbonat, Hydrogencarbonat, Carboxylat, bevorzugt Acetat, oder Hydroxid.

7. Verfahren nach Anspruch 6,
**dadurch gekennzeichnet, dass**
- R₁ und R₂ gleich oder verschieden sind und Alkylgruppen mit 1 bis 12, bevorzugt 1 bis 10, bevorzugter 1 bis 7, noch bevorzugter 1 bis 6, besonders bevorzugt 1 bis 5 und am meisten bevorzugt 1 bis 4 Kohlenstoffatomen sind, wobei die Alkylgruppen linear, verzweigt, cyclisch, gesättigt oder ungesättigt sein können, wobei lineare gesättigte Alkylgruppen am meisten bevorzugt sind,
- R₃ ausgewählt ist aus der Gruppe bestehend aus Alkylgruppen mit 1 bis 12, bevorzugt 1 bis 10, bevorzugter 1 bis 7, noch bevorzugter 1 bis 6, besonders bevorzugter 1 bis 5 und am meisten bevorzugt 1 bis 4 Kohlenstoffatomen, Arylgruppen mit 6 bis 14, bevorzugt 6 bis 12 und am meisten bevorzugt 6 bis 10 Kohlenstoffatomen und Aralkylgruppen mit 7 bis 14, bevorzugt 7 bis 12 und am meisten bevorzugt 7 bis 10 Kohlenstoffatomen, wobei die Alkylgruppen linear, verzweigt, cyclisch, gesättigt oder ungesättigt, am meisten bevorzugt linear, sein können, und
- R₄ ausgewählt ist aus der Gruppe bestehend aus Alkylgruppen mit 3 bis 12, bevorzugt 3 bis 10, bevorzugter 3 bis 7, am meisten bevorzugt 4 bis 6 Kohlenstoffatomen, Arylgruppen mit 6 bis 14, bevorzugt 6 bis 12 und am meisten bevorzugt 6 bis 10 Kohlenstoffatomen, und Aralkylgruppen mit 7 bis 14, bevorzugt 7 bis 12 und am meisten bevorzugt 7 bis 10 Kohlenstoffatomen, wobei die Alkylgruppen linear, verzweigt, cyclisch, gesättigt oder ungesättigt, am meisten bevorzugt linear und gesättigt, sein können, und
- X ausgewählt ist aus der Gruppe bestehend aus Halogenid, bevorzugt Chlorid und/oder Bromid, Hydrogensulfat, Alkylsulfat, bevorzugt Methylsulfat und Ethylsulfat, Carbonat, Hydrogencarbonat, Acetat und Hydroxid, bevorzugt
R₁ bis R₄ so ausgewählt sind, dass die Summe der Kohlenstoffatome in dem quaternären Ammoniumkation 6 bis 14, bevorzugt 7 bis 14, bevorzugter 8 bis 13, beträgt oder
R₁ bis R₄ so ausgewählt sind, dass die Summe der Kohlenstoffatome in dem quartären Ammoniumkation 15 bis 30, bevorzugt 15 bis 28, bevorzugter 15 bis 24, noch bevorzugter 16 bis 22 und am meisten bevorzugt 16 bis 20 beträgt.

8. Verfahren nach einem der Ansprüche 1 bis 7, **dadurch gekennzeichnet, dass** das Polyisocyanurat produziert wird durch Umsetzung von
a) einem Polyesterpolyol oder einer Mischung aus Polyesterpolyolen oder einer Mischung aus einem Polyester- und einem Polyetherpolyol, umfassend isocyanatreaktive Gruppen ausgewählt aus OH-Gruppen, SH-Gruppen, NH-Gruppen, NH₂-Gruppen und Mischungen davon, bevorzugt OH-Gruppen, mit
b) einem Überschuss eines oder mehrerer Isocyanat(e) ausgewählt aus der Gruppe bestehend aus organischem Isocyanat, Mischung aus organischen Isocyanaten, organischem Polyisocyanat, Mischung aus organischen Polyisocyanat(en) und einer Mischung aus organischen Isocyanat(en) und organischen Polyisocyanat(en), in Gegenwart von
c) einem Katalysator, der die Umsetzung der isocyanatenreaktiven Gruppen mit den Isocyanatgruppen und/oder die Umsetzung von Isocyanatgruppen miteinander katalysiert, mit der Maßgabe, dass mindestens ein Trimerisierungskatalysator enthalten ist
d) gegebenenfalls einem Schaumstabilisator
e) gegebenenfalls einem Treibmittel
f) gegebenenfalls weiteren Additiven.

9. Verfahren nach einem der Ansprüche 1 bis 8, **dadurch gekennzeichnet, dass**
die eine oder die mehreren Carbonsäure(n), die nach der Hydrolyse erhalten wird/werden, ausgewählt ist/sind aus der Gruppe bestehend aus Phthalsäure, bevorzugt (ortho)-Phthalsäure, Isophthalsäure, Terephthalsäure und isomeren Naphthalindicarbonsäuren, Bernsteinsäure, Glutarsäure, Adipinsäure, Korksäure, Azelainsäure, Sebacinsäure, Decandicarbonsäure, Maleinsäure, Fumarsäure und Mischungen davon
und/oder
das eine oder die mehreren nach der Hydrolyse erhaltenen Polyol(e) ein Diol auf der Basis von Glykol und/oder Glykolether mit einem Molekulargewicht unter 180 g/mol, bevorzugt unter 140 g/mol ist/sind, besonders bevorzugt Monoethylenglykol und/oder Diethylenglykol,
und/oder
das eine oder die mehreren nach der Hydrolyse erhaltenen organischen Amin(e) und/oder Polyamin(e) ausgewählt ist/sind aus der Gruppe bestehend aus Dodecan-1,12-diamin, 2-Ethyltetramethylen-1,4-diamin, 2-Methylpentamethylen-1,5-diamin, Tetramethylen-1,4-diamin, Pentamethylendiamin (PDA) und bevorzugt Hexamethylen-1,6-diamin (HMDA), cycloaliphatischen Diaminen, wie Cyclohexan-1,3- und 1,4-diamin und auch beliebigen Mischungen dieser Isomere, 4,4'-Methylendicyclohexyldiisocyanat (H12MDI), 1-Isocyanato-3,3,5-trimethyl-5-isocyanatomethylcyclohexan (Isophorondiamin oder der Kürze halber IPDA), Hexahydrotolylen-2,4- und 2,6-diamin und auch den entsprechenden Isomermischungen, und bevorzugt aromatischen Diaminen und Polyisocyanaten, beispielsweise Toluol-2,4- und 2,6-diamin (TDA) und den entsprechenden Isomermischungen, Naphthalindiamin, Diethyltoluoldiamin, Mischungen von Diphenylmethan-4, 4', 2,4'- und 2,2'-diaminen (MDA) und Polyphenylpolymethylenpolyaminen und ihren höher kondensierten Analoga mit einer durchschnittlichen Funktionalität von 2 bis 4.

10. Verfahren nach einem der Ansprüche 1 bis 9, **dadurch gekennzeichnet, dass**
die Reaktionsprodukte der Hydrolyse voneinander getrennt und gegebenenfalls gereinigt werden, wobei bevorzugte Trenn- und Reinigungsverfahren ausgewählt sind aus der Gruppe bestehend aus Filtration, Membrantrennung, Phasentrennung, chromatographischen Verfahren, Destillation, Extraktion und Kombinationen dieser Verfahren.

11. Verfahren nach einem der Ansprüche 1 bis 10, **dadurch gekennzeichnet, dass** das Polyisocyanurat geschäumt ist, bevorzugt ein Hartschaum ist.

12. Verfahren nach einem der Ansprüche 1 bis 11, **dadurch gekennzeichnet, dass** das Polyisocyanurat mit Wasser und der organischen Aminbase oder mit Wasser, dem organischen Amin und dem Phasentransferkatalysator kontaktiert wird,
bei einer Temperatur von 80 °C bis 220 °C, bevorzugt 100 °C bis 200 °C, bevorzugter 120 °C bis 190 °C und am meisten bevorzugt 140 °C bis 180 °C
und/oder
für 1 Minute bis 48 Stunden, bevorzugt 1 Minute bis 40 Stunden, bevorzugter 5 Minuten bis 35 Stunden, noch bevorzugter 10 Minuten bis 30 Stunden, insbesondere bevorzugt 20 Minuten bis 24 Stunden, besonders bevorzugt 30 Minuten bis 18 Stunden und am meisten bevorzugt 30 Minuten bis 16 Stunden
und/oder
bei atmosphärischem Druck oder unter Druck von 1 bis 30 bar, 2 - 20 bar, bevorzugter 3 bis 15 bar.

13. Verfahren nach einem der Ansprüche 2 bis 12, **dadurch gekennzeichnet, dass** mindestens 0,5 Gew.-% Katalysator, bezogen auf das Gewicht des Polyisocyanurats, verwendet werden, bevorzugter 0,5 bis 15 Gew.-%, noch bevorzugter 1 bis 10 Gew.-%, insbesondere bevorzugt mehr 1 bis 8 Gew.-%, besonders bevorzugt 1 bis 7 und am meisten bevorzugt 2 bis 6 Gew.-%.

14. Verfahren nach einem der Ansprüche 1 bis 13, **dadurch gekennzeichnet, dass** das Gewichtsverhältnis der Summe der organischen Aminbase zu Polyisocyanurat im Bereich von 1 : 100 bis 50 : 1, bevorzugt 1 : 50 bis 25 : 1, bevorzugter 1 : 10 bis 20 : 1, noch bevorzugter 1 : 5 bis 10 : 1 und am meisten bevorzugt 1 : 2 bis 3 : 1 liegt.

15. Verfahren zur Produktion neuer Chemikalien, bevorzugt Polyurethanen, bevorzugt Polyurethanschäumen, oder Polyisocyanuraten, bevorzugt Polyisocyanuratschäumen, umfassend die Schritte:
(1) Hydrolysieren eines Polyisocyanurats in einem Verfahren nach einem der Ansprüche 1 bis 14;
(2) Verwenden der einen oder mehreren Carbonsäure(en) und/oder Polyol(e) und/oder organischen Amin(e) und/oder Polyamin(e), die in Schritt (1) erhalten wurden.

## Revendications

1. Procédé d'hydrolyse d'un polyisocyanurate, **caractérisé en ce que**
le polyisocyanurate est produit par la réaction d'un ou plusieurs polyols choisis dans le groupe constitué par un polyol de polyester, un mélange de polyols de polyesters et un mélange de polyols de polyesters et de polyéthers, avec un excès d'un ou plusieurs isocyanates choisis dans le groupe constitué par un isocyanate organique, un mélange d'isocyanates organiques, un polyisocyanate organique, un mélange de polyisocyanates organiques et un mélange d'un ou plusieurs isocyanates organiques et d'un ou plusieurs polyisocyanates organiques
et **en ce que**
le polyisocyanurate est mis en contact avec de l'eau en présence d'une base amine organique pour fournir un ou plusieurs acides carboxyliques comprenant un nombre supérieur ou égal à 2 de groupes acide carboxylique par molécule et correspondant à l'acide carboxylique ou aux acides carboxyliques utilisés pour préparer le ou les polyols de polyesters qui ont été utilisés pour préparer le polyisocyanurate
et
un ou plusieurs polyols correspondant au polyol ou aux polyols utilisés pour préparer le ou les polyols de polyesters qui ont été utilisés pour préparer le polyisocyanurate
et
une ou plusieurs amines et/ou polyamines organiques, qui correspondent à l'isocyanate organique ou au polyisocyanate organique utilisé pour préparer le polyisocyanurate,
et **en ce que**
le mélange réactionnel comprenant le polyisocyanurate, de l'eau et la base amine organique est un mélange homogène ou hétérogène agité, de préférence une solution ou une émulsion ou une dispersion ou des combinaisons de celles-ci, pendant l'hydrolyse.

2. Procédé selon la revendication 1,
**caractérisé en ce que** le polyisocyanurate est mis en contact avec de l'eau en présence d'une base amine organique et d'un catalyseur de transfert de phase, de préférence un catalyseur de transfert de phase choisi dans le groupe constitué par les sels d'ammonium quaternaire contenant un cation ammonium contenant 6 à 30 atomes de carbone et les sulfonates organiques contenant au moins 7 atomes de carbone.

3. Procédé selon la revendication 1 ou 2, **caractérisé en ce que** la base amine organique est choisie dans le groupe constitué par une amine aliphatique, une amine aromatique, une amine hétéroaromatique et les mélanges de celles-ci, de préférence la base amine organique est une amine aliphatique comprenant un ou plusieurs atomes d'azote tertiaires et/ou ayant un point d'ébullition au-dessous de celui d'au moins une des amines organiques obtenues en tant que produit de l'hydrolyse du polyisocyanurate, de préférence de plus d'une de celles-ci, plus préférablement de toutes celles-ci.

4. Procédé selon l'une quelconque des revendications 1 à 3,
**caractérisé en ce que** la base amine organique est choisie dans le groupe constitué par
- une base répondant à la formule (1)
(((R³)₂N-R²)-(O-R¹)ₓ)_{y}-N(R⁴)_{z} (1)
où
les groupes R¹ présents dans la molécule peuvent être identiques ou différents, les groupes R² présents dans la molécule peuvent être identiques ou différents, les groupes R³ présents dans la molécule peuvent être identiques ou différents et les groupes R⁴ présents dans la molécule peuvent être identiques ou différents et où les R¹ sont identiques ou différents et sont indépendamment les uns des autres choisis dans le groupe constitué par les radicaux alkylène linéaires ou ramifiés comportant 1 à 10, de préférence 2 à 6, plus préférablement 2 à 4 atomes de carbone, le plus préférablement éthylène, propylène ou isopropylène les R² sont identiques ou différents et sont indépendamment les uns des autres choisis dans le groupe constitué par les radicaux alkylène ou hydroxyalkylène linéaires ou ramifiés comportant 1 à 20, de préférence 1 à 18, plus préférablement 2 à 6, encore plus préférablement 2 à 4 atomes de carbone et si R² est un hydroxyalkylène R² comprenant 1 à 5, de préférence 1, 2 ou 3, plus préférablement 1 ou 2 groupes hydroxyle et le plus préférablement 1 groupe hydroxyle, le plus préférablement éthylène, propylène, butylène, hexaméthylène, 2-hydroxypropylène ou isopropylène les R³ sont identiques ou différents et sont indépendamment les uns des autres choisis dans le groupe constitué par l'hydrogène, les groupes alkyle linéaires ou ramifiés comportant 1 à 6, de préférence 1 à 4, plus préférablement 1, 2 ou 3 atomes de carbone, les groupes hydroxyalkyle linéaires ou ramifiés comportant 1 à 6, de préférence 1 à 4, plus préférablement 1, 2 ou 3 atomes de carbone, (CH₂CH₂O)ᵤH, (CH₂CH₂CH₂O)ᵥH et (CH₂CH(CH₃)CH₂O)_{w}H, le plus préférablement l'hydrogène et les groupes méthyle, éthyle, propyle, isopropyle, hydroxyméthyle, 2-hydroxyéthyle, 3-hydroxypropyle, 2-hydroxypropyle, 2-hydroxyisopropyle,
les R⁴ sont identiques ou différents et sont indépendamment les uns des autres choisis dans le groupe constitué par l'hydrogène, les groupes alkyle linéaires ou ramifiés, cycliques ou alicycliques comportant 1 à 20, de préférence 1 à 18, plus préférablement 1 à 6, encore plus préférablement 1 à 4, le plus préférablement 1, 2 ou 3 atomes de carbone, les groupes hydroxyalkyle linéaires ou ramifiés comportant 1 à 6, de préférence 1 à 4, plus préférablement 1, 2 ou 3 atomes de carbone et les résidus cycloalkyle ayant 6 à 18 atomes de carbone, de préférence 6 à 12, plus préférablement 6 à 10 et encore plus préférablement 6 ou 7 atomes de carbone, (CH₂CH₂O)ᵤH, (CH₂CH₂CH₂O)ᵥH et (CH₂CH(CH₃)CH₂O)_{w}H, le plus préférablement les groupes méthyle, éthyle, propyle, butyle, pentyle, hexyle, heptyle, octyle, cyclohexyle, isopropyle, tert-butyle, cyclohexyle, méthylcyclohexyle, 2-cyclohexyléthyle, hydroxyméthyle, 2-hydroxyéthyle, 3-hydroxypropyle, 2-hydroxypropyle, 6-hydroxyhexyle et 2-hydroxyisopropyle, et où
u = 1 à 14, de préférence 1 à 6
v = 1 à 14, de préférence 1 à 6
w = 1 à 14, de préférence 1 à 6
x = 0 ou 1
y = 0 à 3
z = 0 à 3, à condition que si z = 3, un, de préférence deux, plus préférablement les trois R⁴ ne soient pas l'hydrogène,
y + z = 3
- une base répondant à la formule (2)
(( (R⁶)₂N-R⁵)ₐ(H) _{b}N)_{d}-CZ-(N(R⁷)₂)_{c} (2)
où
les groupes R⁵ présents dans la molécule peuvent être identiques ou différents, les résidus R⁶ présents dans la molécule peuvent être identiques ou différents et les résidus R⁷ présents dans la molécule peuvent être identiques ou différents et où
les R⁵ sont identiques ou différents et sont indépendamment les uns des autres choisis dans le groupe constitué par les radicaux alkylène linéaires ou ramifiés comportant 1 à 10, de préférence 2 à 6, plus préférablement 2 à 4 atomes de carbone, un ou plusieurs groupes CH₂ pouvant être remplacés par O pour former des liaisons éther, de préférence les R⁵ sont des groupes éthylène, propylène ou isopropylène
les R⁶ sont identiques ou différents et sont indépendamment les uns des autres choisis dans le groupe constitué par l'hydrogène, les groupes alkyle linéaires ou ramifiés comportant 1 à 6, de préférence 1 à 4, plus préférablement 1, 2 ou 3 atomes de carbone, les groupes hydroxyalkyle linéaires ou ramifiés comportant 1 à 6, de préférence 1 à 4, plus préférablement 1, 2 ou 3 atomes de carbone, (CH₂CH₂O)ᵤH, (CH₂CH₂CH₂O)ᵥH et (CH₂CH(CH₃)CH₂O)_{w}H, le plus préférablement l'hydrogène et les groupes méthyle, éthyle, propyle, isopropyle, hydroxyméthyle, 2-hydroxyéthyle, 3-hydroxypropyle, 2-hydroxypropyle, 2-hydroxyisopropyle,
les R⁷ sont identiques ou différents et sont indépendamment les uns des autres choisis dans le groupe constitué par l'hydrogène, les groupes alkyle linéaires ou ramifiés comportant 1 à 6, de préférence 1 à 4, plus préférablement 1, 2 ou 3 atomes de carbone, les groupes hydroxyalkyle linéaires ou ramifiés comportant 1 à 6, de préférence 1 à 4, plus préférablement 1, 2 ou 3 atomes de carbone, (CH₂CH₂O)ᵤH, (CH₂CH₂CH₂O)ᵥH et (CH₂CH(CH₃)CH₂O)_{w}H, le plus préférablement l'hydrogène et les groupes méthyle, éthyle, propyle, isopropyle, et où Z = O ou NH,
u = 1 à 14, de préférence 1 à 6
v = 1 à 14, de préférence 1 à 6
w = 1 à 14, de préférence 1 à 6
a = 0, 1 ou 2
b = 0, 1 ou 2
a + b = 2
c = 0, 1 ou 2
d = 0, 1 ou 2
c + d = 2
- une base organique comprenant de l'azote, cyclique ou bicyclique, aromatique ou non aromatique, comprenant 4 à 20 atomes de carbone, de préférence 5 à 14, plus préférablement 5 à 12 et le plus préférablement 6 à 10 atomes de carbone et 1 à 4 atomes d'azote, de préférence 1 à 3, plus préférablement 1, 2 ou 3 atomes d'azote, éventuellement la base organique comprenant de l'azote, cyclique ou bicyclique, aromatique ou non aromatique comprenant un ou porte un ou plusieurs atomes O et/ou portant un ou plusieurs substituants, tels que des groupes alkyle ou alcényle linéaires ou ramifiés comportant 1 à 6, de préférence 1 à 4, plus préférablement 1, 2 ou 3 atomes de carbone, des groupes hydroxyalkyle, linéaires ou ramifiés comportant 1 à 6, de préférence 1 à 4, plus préférablement 1, 2 ou 3 atomes de carbone, (CH₂CH₂O)ᵤH, (CH₂CH₂CH₂O)ᵥH et (CH₂CH(CH₃)CH₂O)_{w}H, le plus préférablement l'hydrogène et des groupes méthyle, éthyle, propyle, isopropyle, hydroxyméthyle, 2-hydroxyéthyle, 3-hydroxypropyle, 2-hydroxypropyle, 2-hydroxyisopropyle, ou un ou plusieurs groupes fonctionnels comprenant N et/ou O et/ou deux ou plus de deux cycles organiques comprenant de l'azote cycliques ou bicycliques non aromatiques étant liés les uns aux autres par le biais de liaisons alkylène ou éther-alkylène comportant 1 à 12, de préférence 1 à 6 atomes de carbone,
- et les mélanges de celles-ci.

5. Procédé selon la revendication 4,
**caractérisé en ce que** la base amine organique est choisie dans le groupe constitué par
- une trialkylamine répondant à la formule (3)
NR⁴R^{4'}R^{4"} (3)
R⁴, R^{4'}, R^{4"} étant identiques ou différents et étant indépendamment choisis dans le groupe constitué par l'hydrogène, les groupes alkyle linéaires ou ramifiés, cycliques ou alicycliques comportant 1 à 20, de préférence 1 à 18, plus préférablement 1 à 6, encore plus préférablement 1 à 4, le plus préférablement 1, 2 ou 3 atomes de carbone, les groupes hydroxyalkyle linéaires ou ramifiés comportant 1 à 6, de préférence 1 à 4, plus préférablement 1, 2 ou 3 atomes de carbone et les résidus cycloalkyle ayant 6 à 18 atomes de carbone, de préférence 6 à 12, plus préférablement 6 à 10 et encore plus préférablement 6 ou 7 atomes de carbone, (CH₂CH₂O)ᵤH, (CH₂CH₂CH₂O)ᵥH et (CH₂CH(CH₃)CH₂O)_{w}H, le plus préférablement les groupes méthyle, éthyle, propyle, butyle, pentyle, hexyle, heptyle, octyle, cyclohexyle, isopropyle, tert-butyle, cyclohexyle, méthylcyclohexyle, 2-cyclohexyléthyle, hydroxyméthyle, 2-hydroxyéthyle, 3-hydroxypropyle, 2-hydroxypropyle, 6-hydroxyhexyle et 2-hydroxyisopropyle,
u = 1 à 14, de préférence 1 à 6
v = 1 à 14, de préférence 1 à 6
w = 1 à 14, de préférence 1 à 6
à condition qu'un, de préférence deux, plus préférablement les trois de R⁴, R^{4'} et R^{4"} ne soient pas l'hydrogène,
- une polyamine répondant à la formule (4) ((R³)₂N-R²)₃N (4),
où
les R² sont identiques ou différents et sont indépendamment les uns des autres choisis dans le groupe constitué par les radicaux alkylène ou hydroxyalkylène linéaires ou ramifiés comportant 1 à 20, de préférence 1 à 18, plus préférablement 2 à 6, encore plus préférablement 2 à 4 atomes de carbone et si R² est un hydroxyalkyle R² comprenant 1 à 5, de préférence 1, 2 ou 3, plus préférablement 1 ou 2 groupes hydroxyle et le plus préférablement 1 groupe hydroxyle, le plus préférablement éthylène, propylène, butylène, hexaméthylène, 2-hydroxypropylène ou isopropylène les R³ sont identiques ou différents et sont indépendamment les uns des autres choisis dans le groupe constitué par l'hydrogène, les groupes alkyle linéaires ou ramifiés comportant 1 à 6, de préférence 1 à 4, plus préférablement 1, 2 ou 3 atomes de carbone, les groupes hydroxyalkyle linéaires ou ramifiés comportant 1 à 6, de préférence 1 à 4, plus préférablement 1, 2 ou 3 atomes de carbone, (CH₂CH₂O)ᵤH, (CH₂CH₂CH₂O)ᵥH et (CH₂CH(CH₃)CH₂O)_{w}H, le plus préférablement l'hydrogène et les groupes méthyle, éthyle, propyle, isopropyle, hydroxyméthyle, 2-hydroxyéthyle, 3-hydroxypropyle, 2-hydroxypropyle, 2-hydroxyisopropyle,
u = 1 à 14, de préférence 1 à 6
v = 1 à 14, de préférence 1 à 6
w = 1 à 14, de préférence 1 à 6
- une polyamine répondant à la formule (5)
(((R³)₂N-R²)-(O-R¹)ₓ)_{y}-N(R⁴)_{z} (5)
où x = 0 ou 1, y = 1 ou 2 et z = 1 ou 2 et y + z = 3 et où
les R¹ sont identiques ou différents et sont indépendamment les uns des autres choisis dans le groupe constitué par les radicaux alkylène linéaires ou ramifiés comportant 1 à 10, de préférence 2 à 6, plus préférablement 2 à 4 atomes de carbone, le plus préférablement éthylène, propylène ou isopropylène,
les R² sont identiques ou différents et sont indépendamment les uns des autres choisis dans le groupe constitué par les radicaux alkylène ou hydroxyalkylène linéaires ou ramifiés comportant 1 à 20, de préférence 1 à 18, plus préférablement 2 à 6, plus préférablement 2 à 4 atomes de carbone et si R² est un hydroxyalkyle R² comprenant 1 à 5, de préférence 1, 2 ou 3, plus préférablement 1 ou 2 groupes hydroxyle et le plus préférablement 1 groupe hydroxyle, le plus préférablement éthylène, propylène, butylène, hexaméthylène, 2-hydroxypropylène ou isopropylène les R³ sont identiques ou différents et sont indépendamment les uns des autres choisis dans le groupe constitué par l'hydrogène, les groupes alkyle linéaires ou ramifiés comportant 1 à 6, de préférence 1 à 4, plus préférablement 1, 2 ou 3 atomes de carbone, les groupes hydroxyalkyle linéaires ou ramifiés comportant 1 à 6, de préférence 1 à 4, plus préférablement 1, 2 ou 3 atomes de carbone, (CH₂CH₂O)ᵤH, (CH₂CH₂CH₂O)ᵥH et (CH₂CH(CH₃)CH₂O)_{w}H, le plus préférablement l'hydrogène et les groupes méthyle, éthyle, propyle, isopropyle,
les R⁴ sont identiques ou différents et sont indépendamment les uns des autres choisis dans le groupe constitué par l'hydrogène, les groupes alkyle linéaires ou ramifiés, cycliques ou alicycliques comportant 1 à 6, de préférence 1 à 4, plus préférablement 1, 2 ou 3 atomes de carbone, les groupes hydroxyalkyle linéaires ou ramifiés comportant 1 à 6, de préférence 1 à 4, plus préférablement 1, 2 ou 3 atomes de carbone, (CH₂CH₂O)ᵤH, (CH₂CH₂CH₂O)ᵥH et (CH₂CH(CH₃)CH₂O)_{w}H, le plus préférablement les groupes méthyle, éthyle, propyle, butyle, pentyle, hexyle, heptyle, octyle, cyclohexyle, isopropyle, tert-butyle, cyclohexyle, méthylcyclohexyle, 2-cyclohexyléthyle, hydroxyméthyle, 2-hydroxyéthyle, 3-hydroxypropyle, 2-hydroxypropyle, 6-hydroxyhexyle et 2-hydroxyisopropyle
u = 1 à 14, de préférence 1 à 6
v = 1 à 14, de préférence 1 à 6
w = 1 à 14, de préférence 1 à 6
- une polyaminoalkyurée répondant à la formule (6)
(((R⁶)₂N-R⁵)ₐ(H)_{b}N)_{d}-CO-(N(R⁷)₂)_{c} (6)
où
les R⁵ sont identiques ou différents et sont indépendamment les uns des autres choisis dans le groupe constitué par les radicaux alkylène linéaires ou ramifiés comportant 1 à 10, de préférence 2 à 6, plus préférablement 2 à 4 atomes de carbone, un ou plusieurs groupes CH₂ pouvant être remplacés par O pour former des liaisons éther, de préférence les R⁵ sont des groupes éthylène, propylène ou isopropylène
les R⁶ sont identiques ou différents et sont indépendamment les uns des autres choisis dans le groupe constitué par l'hydrogène, les groupes alkyle linéaires ou ramifiés comportant 1 à 6, de préférence 1 à 4, plus préférablement 1, 2 ou 3 atomes de carbone, les groupes hydroxyalkyle linéaires ou ramifiés comportant 1 à 6, de préférence 1 à 4, plus préférablement 1, 2 ou 3 atomes de carbone, (CH₂CH₂O)ᵤH, (CH₂CH₂CH₂O)ᵥH et (CH₂CH(CH₃)CH₂O)_{w}H, le plus préférablement les groupes méthyle, éthyle, propyle, isopropyle, hydroxyméthyle, 2-hydroxyéthyle, 3-hydroxypropyle, 2-hydroxypropyle, 2-hydroxyisopropyle,
les R⁷ sont identiques ou différents et sont indépendamment les uns des autres choisis dans le groupe constitué par l'hydrogène, les groupes alkyle linéaires ou ramifiés comportant 1 à 6, de préférence 1 à 4, plus préférablement 1, 2 ou 3 atomes de carbone, les groupes hydroxyalkyle linéaires ou ramifiés comportant 1 à 6, de préférence 1 à 4, plus préférablement 1, 2 ou 3 atomes de carbone, (CH₂CH₂O)ᵤH, (CH₂CH₂CH₂O)ᵥH et (CH₂CH(CH₃)CH₂O)_{w}H, le plus préférablement l'hydrogène et les groupes méthyle, éthyle, propyle, isopropyle, et où u = 1 à 14, de préférence 1 à 6
v = 1 à 14, de préférence 1 à 6
w = 1 à 14, de préférence 1 à 6
a = 0, 1 ou 2
b = 0, 1 ou 2
a + b = 2
c = 0, 1 ou 2
d = 0, 1 ou 2
c + d = 2,
- une base organique comprenant un groupe guanidino répondant à la formule (7)
(((R₆)₂N-R₅)ₐ(H)_{b}N)_{d}-C(NH)-(N(R₇)₂)_{c} (7)
où
les R⁵ sont identiques ou différents et sont indépendamment les uns des autres choisis dans le groupe constitué par les radicaux alkylène linéaires ou ramifiés comportant 1 à 10, de préférence 2 à 6, plus préférablement 2 à 4 atomes de carbone, un ou plusieurs groupes CH₂ pouvant être remplacés par O pour former des liaisons éther, de préférence les R⁵ sont des groupes éthylène, propylène ou isopropylène
les R⁶ sont identiques ou différents et sont indépendamment les uns des autres choisis dans le groupe constitué par l'hydrogène, les groupes alkyle linéaires ou ramifiés comportant 1 à 6, de préférence 1 à 4, plus préférablement 1, 2 ou 3 atomes de carbone, les groupes hydroxyalkyle linéaires ou ramifiés comportant 1 à 6, de préférence 1 à 4, plus préférablement 1, 2 ou 3 atomes de carbone, (CH₂CH₂O)ᵤH, (CH₂CH₂CH₂O)ᵥH et (CH₂CH(CH₃)CH₂O)_{w}H, le plus préférablement les groupes méthyle, éthyle, propyle, isopropyle, hydroxyméthyle, 2-hydroxyéthyle, 3-hydroxypropyle, 2-hydroxypropyle, 2-hydroxyisopropyle,
les R⁷ sont identiques ou différents et sont indépendamment les uns des autres choisis dans le groupe constitué par l'hydrogène, les groupes alkyle linéaires ou ramifiés comportant 1 à 6, de préférence 1 à 4, plus préférablement 1, 2 ou 3 atomes de carbone, les groupes hydroxyalkyle linéaires ou ramifiés comportant 1 à 6, de préférence 1 à 4, plus préférablement 1, 2 ou 3 atomes de carbone, (CH₂CH₂O)ᵤH, (CH₂CH₂CH₂O)ᵥH et (CH₂CH(CH₃)CH₂O)_{w}H, le plus préférablement les groupes méthyle, éthyle, propyle, isopropyle, et où u = 1 à 14, de préférence 1 à 6
v = 1 à 14, de préférence 1 à 6
w = 1 à 14, de préférence 1 à 6
a = 0, 1 ou 2
b = 0, 1 ou 2
a + b = 2
c = 0, 1 ou 2, de préférence 0 ou 1, plus préférablement 0
d = 0, 1 ou 2, de préférence 1 ou 2, plus préférablement 2
c + d = 2,
- et les mélanges de celles-ci.

6. Procédé selon l'une quelconque des revendications 2 à 5,
**caractérisé en ce que** le catalyseur de transfert de phase est un sel d'ammonium quaternaire ayant la structure générale R1R2R3R4NX où R1, R2, R3 et R4 sont identiques ou différents et sont des groupes hydrocarbyle choisis parmi les groupes alkyle, aryle et arylalkyle et X est choisi dans le groupe constitué par les ions halogénure, de préférence chlorure et/ou bromure, hydrogénosulfate, alkylsulfate, de préférence méthylsulfate et éthylsulfate, carbonate, hydrogénocarbonate, carboxylate, de préférence acétate, ou hydroxyde.

7. Procédé selon la revendication 6,
**caractérisé en ce que**
- R₁ et R₂ sont identiques ou différents et sont des groupes alkyle comportant 1 à 12, de préférence 1 à 10, plus préférablement 1 à 7, encore plus préférablement 1 à 6, particulièrement préférablement 1 à 5 et le plus préférablement 1 à 4 atomes de carbone, les groupes alkyle pouvant être linéaires, ramifiés, cycliques, saturés ou insaturés, le plus préférablement étant des groupes alkyle linéaires saturés,
- R₃ est choisi dans le groupe constitué par les groupes alkyle comportant 1 à 12, de préférence 1 à 10, plus préférablement 1 à 7, encore plus préférablement 1 à 6, particulièrement préférablement 1 à 5 et le plus préférablement 1 à 4 atomes de carbone, les groupes aryle comportant 6 à 14, de préférence 6 à 12 et le plus préférablement 6 à 10 atomes de carbone et les groupes aralkyle comportant 7 à 14, de préférence 7 à 12 et le plus préférablement 7 à 10 atomes de carbone, les groupes alkyle pouvant être linéaires, ramifiés, cycliques, saturés ou insaturés, le plus préférablement étant linéaires, et
- R₄ est choisi dans le groupe constitué par les groupes alkyle comportant 3 à 12, de préférence 3 à 10, plus préférablement 3 à 7, le plus préférablement 4 à 6 atomes de carbone, les groupes aryle comportant 6 à 14, de préférence 6 à 12 et le plus préférablement 6 à 10 atomes de carbone et les groupes aralkyle comportant 7 à 14, de préférence 7 à 12 et le plus préférablement 7 à 10 atomes de carbone, les groupes alkyle pouvant être linéaires, ramifiés, cycliques, saturés ou insaturés, le plus préférablement étant linéaires et saturés, et
- X est choisi dans le groupe constitué par les ions halogénure, de préférence chlorure et/ou bromure, hydrogénosulfate, alkylsulfate, de préférence méthylsulfate et éthylsulfate, carbonate, hydrogénocarbonate, acétate ou hydroxyde, de préférence
R₁ à R₄ sont choisis de telle sorte que la somme des atomes de carbone présents dans le cation ammonium quaternaire est de 6 à 14, de préférence de 7 à 14, plus préférablement de 8 à 13,
ou
R₁ à R₄ sont choisis de telle sorte que la somme des atomes de carbone présents dans le cation ammonium quaternaire est de 15 à 30, de préférence de 15 à 28, plus préférablement de 15 à 24, encore plus préférablement de 16 à 22 et le plus préférablement de 16 à 20.

8. Procédé selon l'une quelconque des revendications 1 à 7,
**caractérisé en ce que** le polyisocyanurate est produit par la réaction de
a) un polyol de polyester ou un mélange de polyols de polyesters ou un mélange de polyols de polyesters et de polyéthers, comprenant des groupes réactifs avec les isocyanates choisis parmi les groupes OH, les groupes SH, les groupes NH, les groupes NH₂ et les mélanges de ceux-ci, de préférence des groupes OH, avec
b) un excès d'un ou plusieurs isocyanates choisis dans le groupe constitué par un isocyanate organique, un mélange d'isocyanates organiques, un polyisocyanate organique, un mélange de polyisocyanates organiques et un mélange d'un ou plusieurs isocyanates organiques et d'un ou plusieurs polyisocyanates organiques, en présence de
c) un catalyseur catalysant la réaction des groupes réactifs avec les isocyanates avec les groupes isocyanate et/ou la réaction de groupes isocyanate entre eux, à condition qu'au moins un catalyseur de trimérisation soit inclus,
d) éventuellement un stabilisant de mousse
e) éventuellement un agent propulseur
f) éventuellement d'autres additifs.

9. Procédé selon l'une quelconque des revendications 1 à 8,
**caractérisé en ce que**
le ou les acides carboxyliques obtenus après l'hydrolyse sont choisis dans le groupe constitué par l'acide phtalique, de préférence l'acide (ortho)-phtalique, l'acide isophtalique, l'acide téréphtalique et les acides naphtalènedicarboxyliques isomères, l'acide succinique, l'acide glutarique, l'acide adipique, l'acide subérique, l'acide azélaïque, l'acide sébacique, l'acide décanedicarboxylique, l'acide maléique, l'acide fumarique et les mélanges de ceux-ci
et/ou
le ou les polyols obtenus après l'hydrolyse sont un diol à base de glycol et/ou d'éther de glycol ayant une masse moléculaire au-dessous de 180 g/mol, de préférence au-dessous de 140 g/mol, de préférence en particulier le monoéthylèneglycol et/ou le diéthylèneglycol,
et/ou
la ou les amines et/ou polyamines organiques obtenues après l'hydrolyse sont choisies dans le groupe constitué par la dodécane-1,12-diamine, la 2-éthyltétraméthylène-1,4-diamine, la 2-méthylpentaméthylène-1,5-diamine, la tétraméthylène-1,4-diamine, la pentaméthylènediamine (PDA) et de préférence l'hexaméthylène-1,6-diamine (HMDA), les diamines cycloaliphatiques telles que les cyclohexane-1,3- et 1,4-diamines ainsi que de quelconques mélanges de ces isomères, le 4,4'-diisocyanate de méthylènedicyclohexyle (H12MDI), le 1-isocyanato-3,3,5-triméthyl-5-isocyanatométhylcyclohexane (l'isophoronediamine ou IPDA en abrégé), les hexahydrotolylène-2,4- et 2,6-diamines ainsi que les mélanges d'isomères correspondants et de préférence les diamines et polyisocyanates aromatiques, par exemple les toluène-2,4- et 2,6-diamines (TDA) et les mélanges d'isomères correspondants, la naphtalènediamine, la diéthyltoluènediamine, les mélanges de diphénylméthane-4,4'-, 2,4'- et 2,2'-diamines (MDA) et les polyphénylpolyméthylènepolyamines et leurs analogues condensés supérieurs comportant une fonctionnalité moyenne de 2 à 4.

10. Procédé selon l'une quelconque des revendications 1 à 9,
**caractérisé en ce que**
les produits réactionnels de l'hydrolyse sont séparés les uns des autres, et éventuellement purifiés, les procédés de séparation et de purification préférés étant choisis dans le groupe constitué par une filtration, une séparation sur membrane, une séparation de phases, les procédés chromatographiques, une distillation, une extraction et les combinaisons desdits procédés.

11. Procédé selon l'une quelconque des revendications 1 à 10,
**caractérisé en ce que** le polyisocyanurate est moussé, de préférence en une mousse rigide.

12. Procédé selon l'une quelconque des revendications 1 à 11,
**caractérisé en ce que** le polyisocyanurate est mis en contact avec de l'eau et la base amine organique ou avec de l'eau, l'amine organique et le catalyseur de transfert de phase,
à une température allant de 80 °C à 220 °C, de préférence de 100 °C à 200 °C, plus préférablement de 120 °C à 190 °C et le plus préférablement de 140 °C à 180 °C et/ou
pendant 1 minute à 48 heures, de préférence 1 minute à 40 heures, plus préférablement 5 minutes à 35 heures, encore plus préférablement 10 minutes à 30 heures, de préférence en particulier 20 minutes à 24 heures, particulièrement préférablement 30 minutes à 18 heures et le plus préférablement 30 minutes à 16 heures et/ou
à pression atmosphérique ou sous pression de 1 à 30 bar, 2 à 20 bar, plus préférablement 3 à 15 bar.

13. Procédé selon l'une quelconque des revendications 2 à 12,
**caractérisé en ce qu'**au moins 0,5 pour cent en poids de catalyseur, par rapport au poids du polyisocyanurate, est utilisé, plus préférablement 0,5 à 15 pour cent en poids, encore plus préférablement 1 à 10 pour cent en poids, de préférence en particulier plus de 1 à 8 pour cent en poids, particulièrement préférablement 1 à 7 et le plus préférablement 2 à 6 pour cent en poids.

14. Procédé selon l'une quelconque des revendications 1 à 13,
**caractérisé en ce que** le rapport pondéral de la somme de la base amine organique sur le polyisocyanurate est dans la plage allant de 1:100 à 50:1, de préférence de 1:50 à 25:1, plus préférablement de 1:10 à 20:1, encore plus préférablement de 1:5 à 10:1 et le plus préférablement de 1:2 à 3:1.

15. Procédé pour la production de nouveaux produits chimiques, de préférence de polyuréthanes, de préférence de mousses de polyuréthane, ou de polyisocyanurates, de préférence de mousses de polyisocyanurate, comprenant les étapes consistant à :
(1) hydrolyser un polyisocyanurate dans un procédé selon l'une quelconque des revendications 1 à 14 ;
(2) utiliser le ou les acides carboxyliques et/ou le ou les polyols et/ou la ou les amines et/ou polyamines organiques obtenus à l'étape (1).
